# EUROPÄISCHE PATENTANMELDUNG

(11) **EP 2 898 976 A1**
(43) Veröffentlichungstag der Anmeldung: **29.07.2015**
(21) Anmeldenummer: 14152438.9
(22) Anmeldetag: 24.01.2014
(51) Int. Cl.: B23K 9/013, B23K 9/167, B23K 10/00

(54) **Anordnung und Verfahren zum Plasmaschneiden von Werkstücken**

(71) Anmelder: Kjellberg-Stiftung, 35390 Gießen (DE)
(72) Erfinder: Bach, Friedrich-Wilhelm, Prof. Dr.-Ing., 35390 Gießen (DE); Hassel, Thomas, Dr.-Ing., 30419 Hannover (DE); Laurisch, Frank, 03238 Finsterwalde (DE); Grundke, Timo, 03238 Finsterwalde (DE); Jehnert, Katrin, 03238 Finsterwalde (DE); Krink, Volker, 03238 Finsterwalde (DE)
(74) Vertreter: Pfenning, Meinig & Partner GbR

(57) **Zusammenfassung**

Die Erfindung betrifft eine Anordnung und eine Verfahren zum Plasmaschneiden von Werkstücken mit mindestens zwei Plasmabrennern, die nacheinander und in einem Abstand a zueinander in Bezug zu ihrer Bewegungsrichtung/Vorschubachsrichtung während der Bearbeitung eines Werkstücks angeordnet sind; und die Plasmabrenner in der gleichen Betriebsweise betrieben sind. Die Plasmabrenner können auch so betrieben werden, dass ein Plasmabrenner während des größten Teils der Zeit beim Schneiden des Werkstücks in direkter oder überwiegend direkter Betriebsweise und mindestens ein zweiter Plasmabrenner (2b; 2c) in indirekter oder überwiegend Betriebsweise betrieben wird.

## Beschreibung

Die Erfindung betrifft eine Anordnung und ein Verfahren zum Plasmaschneiden von Werkstücken.

Als Plasma wird ein thermisch hoch aufgeheiztes elektrisch leitfähiges Gas bezeichnet, das aus positiven und negativen Ionen, Elektronen sowie angeregten und neutralen Atomen und Molekülen besteht.

Als Plasmagas werden unterschiedliche Gase, z.B. das einatomige Argon und/oder die zweiatomigen Gase Wasserstoff, Stickstoff, Sauerstoff oder Luft eingesetzt. Diese Gase ionisieren und dissoziieren durch die Energie des Plasmalichtbogens.

Der Plasmastrahl kann in seinen Parametern durch die Gestaltung der Düse und Elektrode stark beeinflusst werden. Diese Parameter des Plasmastrahls sind z.B. der Strahldurchmesser, die Temperatur, Energiedichte und die Strömungsgeschwindigkeit des Gases.

Beim Plasmaschneiden beispielsweise wird das Plasma durch eine Düse, die gas- oder wassergekühlt sein kann, eingeschnürt. Dazu verfügt die Düse über eine Düsenbohrung, durch die der Plasmastrahl strömt. Dadurch können Energiedichten bis 2 x 10⁶ W/cm² erreicht werden. Im Plasmastrahl entstehen Temperaturen bis 30.000°C, die in Verbindung mit der hohen Strömungsgeschwindigkeit des Gases sehr hohe Schneidgeschwindigkeiten an allen elektrisch leitfähigen Werkstoffen realisieren.

Das Plasmaschneiden ist heute ein etabliertes Verfahren zum Schneiden elektrisch leitender Werkstoffe wobei je nach Schneidaufgabe unterschiedliche Gase und Gasgemische eingesetzt werden.

Bei diesem Verfahren wird das Werkstück durch die hohe Energiedichte hohen Temperaturen auf geringem Raum ausgesetzt. Nach dem Schnitt ist die Schnittfläche durch eine Aufhärtung, die über der ursprünglichen Härte des Werkstoffs liegt, gekennzeichnet.

Bei einem Werkstoff unlegierter Stahl (Baustahl) S235JR nach EN 10025 beträgt die Grundhärte nach der Messmethode nach Vickers unter 200 (HV 10). Die DIN 1090-2 vom August 2011 lässt für diese Stahlsorte eine maximale Aufhärtung von 380 (HV 10) zu. Nach dem Schneiden kann diese bei aber über 400 (HV 10) und damit zu hoch liegen.

Dies kann für nachfolgende Arbeitsschritte, z. B. Schweißen, Abkanten oder Beschichten nachteilig sein. So kann es beim Schweißen zur Bildung von Poren, beim Abkanten zu Rissen oder bei Beschichtungen zu schlechterer Anhaftung der Schicht kommen.

Eine Lösung zur Reduzierung der Aufhärtung kann das Vor- und Nachwärmen des Werkstücks, beispielsweise durch das Autogenverfahren (Gasaufheizung) sein. Dies ist sehr aufwändig und dauert sehr lange und ist mit hohen Kosten und Produktivitätsverlust verbunden. Gerade für das Plasmaschneiden, mit dem un- und niedriglegierte Stähle bis zu einer Dicke von 50mm schneller, als dem Autogenschneiden getrennt werden können, ist dies von Nachteil. Typische Schneidgeschwindigkeiten für ein Plasmaschneiden liegen bis zu dieser Blechdicke über 1m/min.

Beschichtungen sind besonders dann problematisch, wenn zusätzlich die Kante zwischen der Oberseite des Werkstücks und der Schnittfläche scharfkantig ausgebildet ist. Bei den modernen Plasmaschneidverfahren, insbesondere bei denen mit erhöhter Einschnürung nach DVS-Merkblatt 2107 werden Schnittflächen mit geringer Rechtwinkligkeits- und Neigungstoleranz sowie geringer Rauigkeit nach DIN EN ISO 9013 erreicht. Diese guten Ergebnisse sind aber zumeist auch mit einem scharfkantigen Übergang verbunden. Hier ist zur besseren Anhaftung der Beschichtung eine Abrundung oder zumindest ein "Brechen" der Kante von Vorteil.

Der Einsatz konventioneller Plasmaschneidbrenner kann zu Kanten führen, die abgerundet sind, dies führt aber auch zu größerer Rechtwinkligkeits- und Neigungstoleranz und damit zu schlechterer Schnittqualität. Die Werte für die Aufhärtung liegen ebenfalls zu hoch.

Aufgabe der Erfindung ist es, die Aufhärtung der Schnittflächen beim Plasmaschneiden zu reduzieren und dabei auch eine möglichst gute Qualität der Schnittfläche, insbesondere eine geringe Rechtwinkligkeits- und Neigungstoleranz, beizubehalten. Wenn möglich, soll die obere Kante zwischen der Werkstückoberseite und der Schnittfläche gebrochen abgerundet werden, so dass sie nicht mehr scharfkantig ist.

Gleichzeitig soll die Produktivität des Plasmaschneidens erhalten bleiben, insbesondere seine Schneidgeschwindigkeit und nach Möglichkeit sollen keine zusätzliche Vor- und Nachbearbeitung des Werkstücks/der Werkstücke notwendig sein.

Eine erfindungsgemäße Anordnung ist dabei so ausgebildet, dass mindestens zwei Plasmabrenner, an denen jeweils mindestens eine Elektrode und eine Düse, mindestens eine elektrische Stromquelle vorhanden sind. Die Plasmabrenner sind nacheinander und in einem Abstand a zueinander in Bezug zu ihrer Bewegungsrichtung/Vorschubachsrichtung während der Bearbeitung eines Werkstücks angeordnet. Die Plasmabrenner können dabei in der gleichen Betriebsweise betrieben werden. Dies sind die nachfolgend noch zu erläuternden direkten und indirekten Betriebsweisen. Dabei soll unter gleicher Betriebsweise ein Betrieb der Plasmabrenner verstanden werden, bei dem die Plasmabrenner direkt oder indirekt oder ein Plasmabrenner direkt und mindestens ein weiterer Plasmabrenner überwiegend direkt betrieben wird. Es kann aber auch ein Plasmabrenner indirekt und ein weiterer Plasmabrenner überwiegend indirekt betrieben werden. Überwiegend direkt oder indirekt betriebene Plasmabrenner sollten bevorzugt in Bewegungsrichtung/Vorschubachsrichtung nachfolgend an einen direkt oder indirekt betriebenen Plasmabrenner angeordnet sein und dessen Plasmastrahl in eine mit dem in Bewegungsrichtung/Vorschubachsrichtung davor angeordneten Plasmabrenner ausgebildete Schnittfuge gerichtet sein.

In einer weiteren erfindungsgemäßen Alternative ist ein erster Plasmabrenner so ausgebildet, dass während des größten Teils der Zeit beim Schneiden des Werkstücks mittels eines aus der Düsenbohrung seiner Düse austretenden Plasmastrahls in direkter Betriebsweise, bei der der gesamte durch die Elektrode des ersten Plasmabrenners fließende elektrische Strom durch das Werkstück 4 fließt, oder in überwiegend direkter Betriebsweise, bei der mehr als 50% des durch die Elektrode des ersten Plasmabrenners fließenden elektrischen Stroms durch das Werkstück zur elektrischen Stromquelle fließt, betrieben wird.

Mindestens ein zweiter Plasmabrenner wird dabei in indirekter Betriebsweise betrieben, bei der der gesamte des durch die jeweilige Elektrode des zweiten und/oder eines dritten Plasmabrenners fließenden elektrischen Stroms nicht durch das Werkstück zur elektrischen Stromquelle fließt. Er kann aber auch in überwiegend indirekter Betriebsweise betrieben werden, indem weniger als 50% des durch die jeweilige Elektrode des zweiten und/oder eines dritten Plasmabrenners fließenden elektrischen Stroms durch das Werkstück zur Stromquelle fließen.

Mindestens zwei Plasmabrenner können so angeordnet sein, dass zwei nebeneinander angeordnete Schnittfugen im Werkstück ausgebildet werden. Dadurch besteht die Möglichkeit zwei erhaltene Teile des so geschnittenen Werkstücks für eine Weiterbearbeitung zu nutzen.

Bei der erfindungsgemäßen Anordnung kann der aus der/den Düsenbohrung(en) der Düse(n) des zweiten Plasmabrenners oder eines weiteren Plasmabrenners austretende Plasmastrahl so ausgerichtet sein, dass der/die Plasmastrahl(en) in eine vom ersten Plasmabrenner im Werkstück ausgebildete Schnittfuge hinein geführt ist/sind. Allein oder zusätzlich dazu kann/können dieser/diese Plasmastrahl(en) an einer Schnittfläche einen Teil des Werkstoffs am Werkstück in der vom ersten Plasmabrenner im Werkstück ausgebildeten Schnittfuge abtragen.

Die Plasmabrenner können vorteilhaft so ausgebildet sein, dass die Rotation der Plasmagase PG und/oder der Sekundärgase von mindestens zwei eingesetzten Plasmabrenner entgegengesetzt zueinander gerichtet sind. Dabei kann einer dieser Plasmabrenner in direkter oder überwiegend direkter Betriebsweise und mindestens ein weiterer Plasmabrenner in indirekter oder überwiegend indirekter Betriebsweise betrieben sein. Die Plasmastrahlen der Plasmabrenner sollten auf die Werkstückoberfläche dabei in einem Abstand zueinander auftreffen.

Die Richtung der Rotation der Plasmagase PG und/oder der Sekundärgase kann auch vorteilhaft für die Ausbildung von Schnittkanten mit erhöhter Qualität an Schnittfugen ausgenutzt werden. Ein rotierender Plasmastrahl kann dazu in eine Schnittfuge so gerichtet werden, dass der Plasmastrahl eine der beiden Schnittkanten der ausgebildeten Schnittfuge kontaktiert oder zumindest nahezu kontaktiert. Die Rotationsrichtung sollte dann so gewählt sein, dass der Vektor der Rotationsbewegung an dieser Schnittkante entgegengesetzt zur Bewegungs-/Vorschubachsrichtung ausgerichtet ist.

Die Düsenbohrungen, durch die die jeweiligen Plasmastrahlen des ersten und des zweiten und/oder eines weiteren Plasmabrenners austreten, sollten in einem Abstand von maximal 60 mm, bevorzugt von maximal 45 mm, besonders bevorzugt von maximal 27 zueinander angeordnet sein. Durch diesen relativ kurzen Abstand kann die gewünschte Reduzierung der vorab durch das Plasmaschneiden erhöhten Härte des Werkstoffs sehr einfach, sicher, mit geringem Aufwand und Kosten erreicht werden. Dabei kann die Restwärme bei der Ausbildung der Schnittfuge genutzt werden.

Die Mittellinien der Düsenbohrungen der eingesetzten Plasmabrenner sollten parallel zueinander oder in einem Winkel β von max. 75° zueinander geneigt ausgerichtet sein.

Bei dem erfindungsgemäßen Verfahren zum Plasmaschneiden von Werkstücken soll so vorgegangen werden, dass mindestens zwei Plasmabrenner nacheinander und in einem Abstand a zueinander in Bezug zu ihrer Bewegungsrichtung/Vorschubachsrichtung während der Bearbeitung eines Werkstücks bewegt werden, wobei mit dem Plasmastrahl eines ersten Plasmabrenners im Werkstück eine Schnittfuge ausgebildet und das Werkstück geschnitten wird.

Mit dem Plasmastrahl mindestens eines weiteren Plasmabrenners wird die Härte des Werkstoffs in mindestens einem Bereich mindestens einer Schnittfläche an der Schnittfuge reduziert.

Dabei wird während des größten Teils der Zeit beim Schneiden des Werkstücks zumindest der erste Plasmabrenner mittels eines aus der Düsenbohrung seiner Düse austretenden Plasmastrahls in direkter Betriebsweise, bei der der gesamte durch die Elektrode des ersten Plasmabrenners fließende elektrische Strom durch das Werkstück 4 fließt,
oder
in überwiegend direkter Betriebsweise, bei der mehr als 50% des durch die Elektrode des ersten Plasmabrenners fließenden Stroms durch das Werkstück zur elektrischen Stromquelle fließt, betrieben.

Mindestens ein zweiter Plasmabrenner wird in indirekter Betriebsweise, bei der der gesamte des durch die jeweilige Elektrode des zweiten und/oder eines dritten Plasmabrenners fließenden elektrischen Stroms nicht durch das Werkstück zur elektrischen Stromquelle fließt oder in überwiegend indirekter Betriebsweise, bei der weniger als 50% des durch die jeweilige Elektrode des zweiten und/oder eines dritten Plasmabrenners fließenden elektrischen Stroms durch das Werkstück zur elektrischen Stromquelle fließt, betrieben. Bei einem in überwiegend direkter Betriebsweise betriebenem ersten Plasmabrenner sollten mindestens 70% des durch seine Elektrode fließenden elektrischen Stroms auch durch das Werkstück fließen und ei einem in überwiegend indirekter Betriebsweise betriebenen zweiten Plasmabrenner sollten maximal 30% des durch seine Elektrode fließenden elektrischen Stroms durch das Werkstück fließen.

Es sollte eine Differenz zwischen dem durch die Elektrode fließenden Stromes I₁+I₂+I_{1.1} des überwiegend direkt betriebenen Plasmabrenners und /oder überwiegend indirekt betriebenen Plasmabrenners und dem durch das Werkstück fließenden Stroms I₂, der über die Düse des jeweiligen Plasmabrenners (Strom I₂) und/oder eine Zusatzelektrode (Strom I_{1.1}) fließt, eingehalten sein.

Die Plasmabrenner sollten so bewegt werden, dass sie der gleichen Bewegungsrichtung/Vorschubachsrichtung folgen oder die Plasmabrenner parallel zueinander bewegt werden, um eine gewünschte Schneidkontur einhalten zu können, wobei die infolge des Schneidens mit dem ersten Plasmabrenner erhöhte Härte des Werkstoffs des Werkstücks im Bereich um die Schnittfuge durch den Einfluss des Plasmastrahls eines weiteren Plasmastrahls, der von einem weiteren Plasmabrenner auf das Werkstück nachfolgend gerichtet wird, wieder auf einen zulässigen Härtewert zu reduzieren. Dies soll auch bei der Ausbildung von Kurven oder Radien einer ausgebildeten Schnittfuge erreicht werden können.

Beim Schneiden sollte ein minimaler Abstand von Schnittflächen der Schnittfugen, die an jeweils der anderen Schnittfuge zugewandten Seite ausgebildet sind, der maximal dem Fünffachen, vorteilhaft dem Dreifachen der Breite b1; b2 der jeweils breiteren Schnittfuge beträgt, eingehalten werden, wenn zwei Schnittfugen beim Schneiden ausgebildet werden.

Die eingesetzten Plasmabrenner sollten mit einer Geschwindigkeit gegenüber dem Werkstück bewegt werden, die maximal um 20%, bevorzugt weniger als 10 % voneinander abweicht. Besonders bevorzugt sollten die Plasmabrenner mit der gleichen Geschwindigkeit bewegt werden. In jedem Fall sollte eine gemeinsame und gleichzeitige Bewegung erfolgen.

Der erste Plasmabrenner, der generell in Bewegungsrichtung/Vorschubachsrichtung das Werkstück mit seinem Plasmastrahl zuerst beeinflusst, sollte mit einer als Kathode gepolten Elektrode und der zweite oder dritte Plasmabrenner mit einer als Kathode oder Anode gepolten Elektrode betrieben werden.

Vorteilhaft ist es, einen Quotient aus dem elektrischen Strom I₁+I₂+I_{1.1}, der während des größten Teils der Zeit der Bearbeitung zum Schneiden durch die Elektrode fließt, und dem kleinsten Durchmesser der Düsenbohrung der Düse des ersten Plasmabrenners, der in direkter oder überwiegend direkter Betriebsweise betrieben wird, größer ist, als der Quotient aus dem elektrischen Strom I₁+I₂+I_{1.1}, der während des größten Teils der Zeit der Bearbeitung zum Schneiden durch die Elektrode(n) des/der zweiten und/oder dritten Plasmabrenners fließt, und dem kleinsten Durchmesser der Düsenbohrung(en) der Düse(n) des zweiten oder dritten Plasmabrenners, der/die in indirekter oder überwiegend indirekter Betriebsweise betrieben wird/werden, einzuhalten. Dieser Quotient sollte mindestens 25%, vorteilhaft 50 % größer sein.

Es besteht auch die Möglichkeit einen Quotient aus dem elektrischen Strom I₁+I₂+I_{1.1}, der während der während des größten Teils der Zeit für die Bearbeitung zum Schneiden durch die Elektrode des ersten Plasmabrenners fließt und dem Flächeninhalt der durch den kleinsten Durchmesser der Düsenbohrung gebildeten Fläche der Düse des ersten Plasmabrenners, der in direkter oder überwiegend direkter Betriebsweise betrieben wird, größer als 20 A /mm² und/oder dass als der Quotient aus dem elektrischen Strom I₁+I₂+I_{1.1}, der während des größten Teils der Zeit für die Bearbeitung zum Schneiden durch die Elektrode(n) des zweiten und/oder eines dritten Plasmabrenners fließt und dem und dem Flächeninhalt des kleinsten Durchmesser der Düsenbohrung(en) der Düse(n) des zweiten oder dritten Plasmabrenners, der/die in indirekter oder überwiegend indirekter Betriebsweise betrieben wird/werden, kleiner als 20 A/mm² beträgt, einzuhalten.

Die eingesetzten Plasmabrenner können so zueinander angeordnet sein, dass in Bewegungsrichtung/Vorschubachsrichtung der erste Plasmabrenner dem zweiten und ggf. einem dritten Plasmabrenner, bezogen auf die jeweilige Düsenbohrung aus der der jeweilige Plasmastrahl heraustritt, vorläuft, also auf die Werkstückoberfläche in dieser Richtung vor einem weiteren Plasmastrahl auftrifft und der aus der Düsenbohrung der Düse es ersten Plasmabrenners austretende Plasmastrahl das Werkstück schneidet und eine Schnittfuge bildet.

Die eingesetzten Plasmabrenner können von einem Führungssystem gemeinsam geführt werden und so Geraden und unterschiedliche Konturen geschnitten werden können.

Der erste und der zweite und ggf. ein dritter Plasmabrenner können mit ihren Plasmastrahlen bezogen auf ihre Düsenbohrungen von einem Führungssystem auf der gleichen Kontur oder Konturen, die voneinander maximal mit dem Sechsfachen, besser dem maximal Dreifachen der Breite b1 der Schnittfuge, auf der Werkstückunterfläche gemessen, voneinander abweichen, geführt werden.

Beim Schneiden von Werkstücken aus un- und niedriglegiertem Stahl kann der erste Plasmabrenner zum Schneiden mit einem Plasmagas aus oxidierendem Gas oder Gasgemisch und der zweite oder dritte Plasmabrenner mit einem Plasmagas aus oxidierenden oder nicht oxidierenden oder einem reduzierendem Gas oder Gasgemisch betrieben werden. Beim Schneiden von hochlegiertem Stahl oder Aluminium kann der erste Plasmabrenner zum Schneiden mit einem Plasmagas aus nicht oxidierendem oder reduzierendem Gas oder Gasgemisch und der zweite oder dritte Plasmabrenner mit einem Plasmagas aus nicht oxidierenden oder einem reduzierendem Gas oder Gasgemisch betrieben werden.

Beim Schneiden von Werkstücken, die aus un- und niedriglegiertem Stahl hergestellt worden sind, kann der erste Plasmabrenner zum Schneiden mit einem Sekundärgas aus oxidierendem oder nichtoxidierendem Gas oder Gasgemisch. Beim Schneiden von Werkstücken aus hochlegiertem Stahl oder Aluminium kann der erste Plasmabrenner und/oder zweite oder dritte Plasmabrenner mit einem Sekundärgas aus nicht oxidierenden und/oder einem reduzierendem Gas oder Gasgemisch betrieben werden.

Als Prozessparameter können zumindest die Volumenströme und/oder Drücke für Plasmagas, die elektrischen Ströme und die Schneid/Vorschubgeschwindigkeit in einer Datenbank gespeichert worden sein. Als zusätzliche Parameter können der Brennerabstand (Abstand der Düse oder Elektrode zur Werkstückoberfläche), die elektrische Spannung und die Volumenströme und/oder Drücke für Sekundärgas ebenfalls in einer Datenbank gespeichert sein. Die in der Datenbank gespeicherten Daten der Prozessparameter können an die Steuerung des Führungssystems und/oder der Plasmaanlage(n) übergeben werden, so dass ein automatisierter Betrieb möglich wird. Dabei kann natürlich auch die Steuerung der Bewegungs/Vorschubachsrichtung entsprechend einer vorgegebenen Schneidkontur mit entsprechenden elektronischen Daten, z.B. einer CAD-Datei, erreicht werden.

Nachfolgend soll die Erfindung anhand von Beispielen näher erläutert werden. Dabei sollen die einzelnen Beispielen und/oder Figuren zugeordneten Merkmale nicht auf eine Anwendung für das jeweilige Beispiel beschränkt sein und beliebig miteinander kombiniert eingesetzt werden können.

Dabei zeigen:
- Figur 1: Schematische Darstellung Plasmabrenner in direkter Betriebsweise mit elektrischer Stromquelle;
- Figur 2: Schematische Darstellung Plasmabrenner in indirekter Betriebsweise mit elektrischer Stromquelle;
- Figur 3: Schematische Darstellung Plasmabrenner in indirekter Betriebsweise mit Zusatzelektrode mit elektrischer Stromquelle;
- Figur 4: Schematische Darstellung Plasmabrenner in überwiegend direkter oder überwiegend indirekter Betriebsweise mit zwei elektrischen Stromquellen;
- Figur 5: Schematische Darstellung Plasmabrenner in überwiegend direkter oder überwiegend indirekter Betriebsweise mit Zusatzelektrode mit zwei elektrischen Stromquellen;
- Figur 6: Anordnung von zwei Plasmabrennern;
- Figur 6a: Einzelheit A Schnittfuge aus Figur 6;
- Figur 7a-7c: Schematische Ansicht auf eine Anordnung von zwei Plasmabrennern und Werkstück von oben;
- Figur 7d: Schematische Ansicht auf eine Anordnung mit zwei versetzt angeordneten Plasmabrennern und Werkstück von oben;
- Figur 7e: Ansicht A-A von Figur 7d, Ansicht auf Werkstück mit Schnittfuge;
- Figur 7f: Schematische Ansicht auf eine Anordnung von zwei versetzt zueinander angeordneten Plasmabrennern und Werkstück von oben;
- Figur 7g: Ansicht A-A von Figur 7f, Ansicht auf Werkstück mit Schnittfuge
- Figur 7h: Schematische Ansicht auf eine Anordnung mit drei Plasmabrennern und Werkstück von oben;
- Figur 7i: Schematische Ansicht auf eine Anordnung mit drei versetzt angeordneter Plasmabrenner und Werkstück von oben;
- Figur 7j: Ansicht A-A von Figur 7f, Ansicht auf Werkstück mit Schnittfuge;
- Figur 8: Schematische Ansicht auf eine Anordnung von zwei versetzt angeordneten Plasmabrennern und Werkstück von oben;
- Figur 8a: Ansicht A-A von Figur 8, Ansicht auf Werkstück mit Schnittfugen;
- Figur 9a, 9b: Anordnung mit zwei Plasmabrennern, wobei ein zweiter Plasmabrenner geneigt ist;
- Figur 10a-d: Schnittbilder von Beispielen für Plasmabrenner;
- Figur 11a,b: ein Plasmagasführungsteil und
- Figur 12a,b: ein Sekundärgasführungsteil.

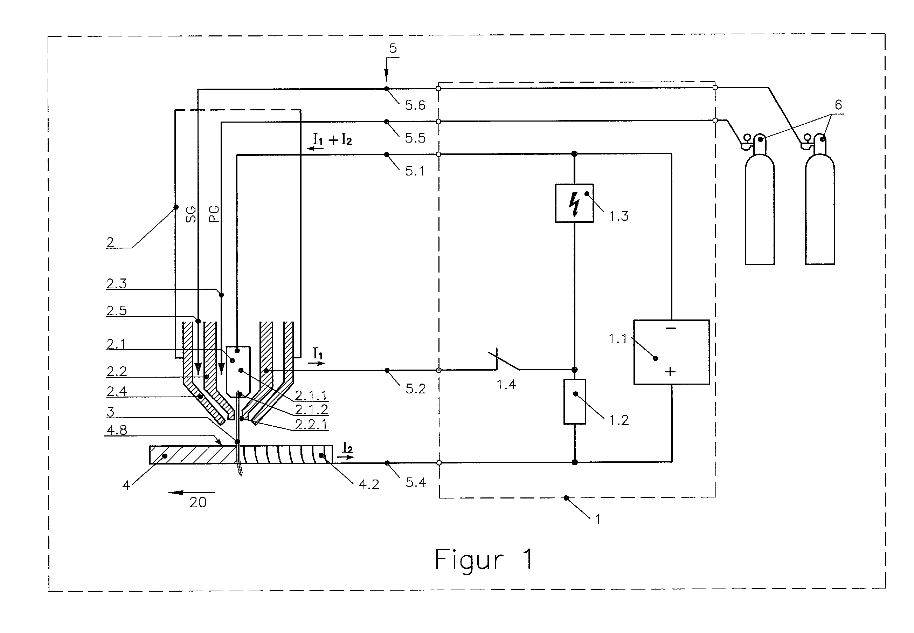

Eine herkömmliche Anordnung zum Plasmaschneiden ist in **Figur 1** dargestellt.

Diese besteht aus der Plasmaanlage 1, dem Plasmabrenner 2, dem Werkstück 4, den Leitungen 5 und der Gasversorgung 6.

Die wesentlichen Bestandteile der Plasmaanlage 1 sind die Stromquelle 1.1, der Pilotwiderstand 1.2, das Zündgerät 1.3 und der Schaltkontakt 1.4.

Der Plasmabrenner 2 besteht im Wesentlichen aus dem Plasmabrennerkopf mit der Elektrode 2.1, der Düse 2.2 der Gaszuführung 2.3 für das Plasmagas PG und dem Brennerkörper, der die Zuführung der Medien (Gas, Kühlwasser und Strom) realisiert und weitere Bestandteile aufnimmt. Zusätzlich kann um die Düse 2.2 des Plasmabrenners 2 eine Sekundärgaskappe 2.4 zur Zuführung eines Sekundärmediums zum Plasmastrahl 3, z. B. ein Sekundärgas SG, das über die Sekundärgaszuführung 2.5 dem Plasmabrenner 2 zugeführt wird, vorhanden sein. Dies ist besonders bei modernen Plasmabrennern der Fall, es gibt aber auch Plasmabrenner, die keine Sekundärgaskappe aufweisen. Bei der Elektrode 2.1 des Plasmabrenners 2 handelt es sich um eine nicht abschmelzende Elektrode 2.1, die im Wesentlichen aus einem Hochtemperaturwerkstoff, wie z.B. Wolfram, Zirkonium oder Hafnium besteht und dadurch eine sehr lange Lebensdauer hat. Oft ist die Elektrode 2.1 aus zwei miteinander verbundenen Teilen, dem Elektrodenhalter 2.1.1 und dem Emissionseinsatz 2.1.2 gefertigt, wobei der Elektrodenhalter 2.1.1 aus gut elektrisch und thermisch leitendem Werkstoff (z. B. Kupfer, Silber oder Legierungen daraus) und der Emissionseinsatz 2.1.2 aus einem Hochtemperaturwerkstoff (Hafnium, Zirkonium, Wolfram oder Legierungen daraus) besteht. Die Düse 2.2 besteht meist aus Kupfer und schnürt den Plasmastrahl 3, der durch die Düsenbohrung 2.2.1 austritt, ein. Zwischen der Elektrode 2.1 und der Düse 2.2 kann eine Gasführung (hier nicht dargestellt) für das Plasmagas PG, die das Plasmagas PG in Rotation versetzt, angeordnet sein. Die Stelle des Plasmabrenners, aus der der Plasmastrahl 3 über die Düse 2.2 oder die Sekundärgaskappe 2.4 austritt, wird als Plasmabrennerspitze bezeichnet.

Für den Schneidprozess wird zunächst ein Pilotlichtbogen, der zwischen Elektrode 2.1 und Düse 2.2 mit geringem Strom I₁ (z.B. 10 A - 30 A) und damit geringer Leistung brennt, z. B. mittels Hochspannung, die durch das Zündgerät 1.3 zur Verfügung gestellt wird, gezündet. Der Strom I₁ des Pilotlichtbogens, der durch die Leitung 5.1 zur Elektrode 2.1 hin und die Leitung 5.2 von der Düse 2.2 zur Stromquelle 1.1 zurück fließt, wird durch den elektrischen Widerstand 1.2 begrenzt. Dieser energiearme Pilotlichtbogen bereitet durch teilweise Ionisation die Strecke zwischen Plasmaschneidbrenner 2 und Werkstück 4 für den eigentlichen Schneidlichtbogen vor.

Berührt der Pilotlichtbogen das Werkstück 4, kommt es durch den vom elektrischen Widerstand 1.2 hervorgerufenen elektrischen Potenzialunterschied zwischen Düse 2.2 und Werkstück 4 zur Ausbildung des Schneidlichtbogens. Dieser brennt dann zwischen der Elektrode 2.1 und dem Werkstück 4 mit meist größerem Strom I₂ (z. B. 35 A - 900 A) und hat damit auch eine größere Leistung. Der Schaltkontakt 1.4 wird geöffnet und die Düse 2.2 von der Stromquelle 1.1 potenzialfrei geschaltet.

Danach fließt der elektrische Schneidstrom I₂ von der elektrischen Stromquelle 1.1 über die Leitung 5.1 zur Elektrode 2.1 des Plasmabrenners 2 über den von der Düse 2.2 und der Düsenbohrung 2.2.1 eingeschnürten Plasmastrahl 3 zum Werkstück 4 und dann über die Leitung 5.4 zurück zur Stromquelle 1.1. Dies wird als direkte Betriebsweise bezeichnet.

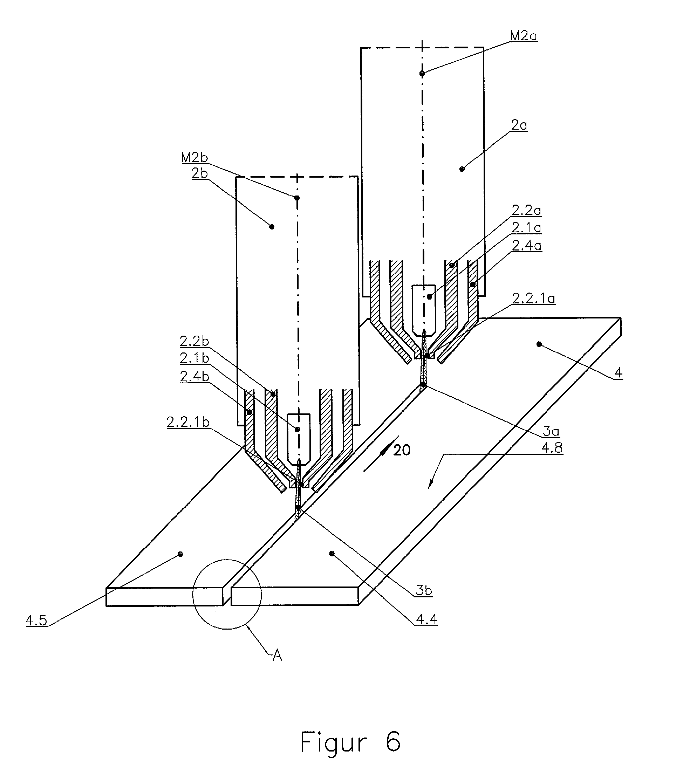

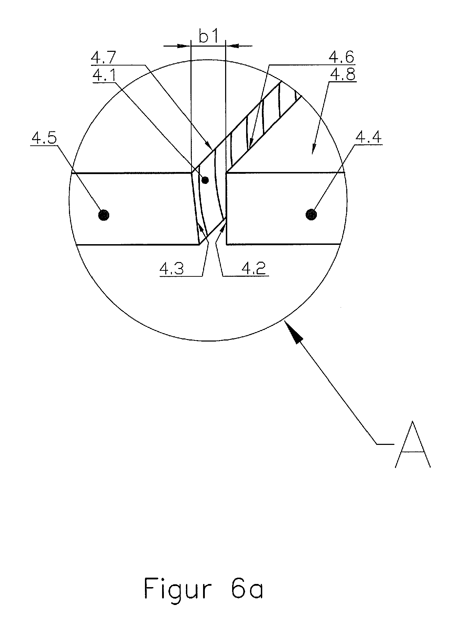

Dabei wird das Werkstück 4 der thermischen, kinetischen und elektrischen Wirkung des Plasmastrahls 3 ausgesetzt, da sich ein Lichtbogenansatzpunkt, hier die Anode, auf dem Werkstück 4 befindet. Der Plasmastahl trifft auf die Oberseite 4.8 des Werkstücks, die Schnittfuge wird ausgebildet und es werden die Kanten 4.2, 4.3, wie in Figur 6a gezeigt, ausgebildet. Das Verfahren ist sehr effektiv und es können beispielsweise hochlegierte Stähle bis zu großen Dicken, z.B. 160 mm bei 600 A Schneidstrom mit einer Schneidgeschwindigkeit von 0,2 m/min oder niedriglegierte Stähle mit einer Dicke von 20 mm bei 300A mit einer Schneidgeschwindigkeit von 2 m/min geschnitten werden Dazu wird der Plasmabrenner 2 mit Hilfe eines Führungssystems relativ zu einem Werkstück bzw. seiner Oberseite bewegt (Bewegungsrichtung 20). Dies kann z.B. ein Roboter oder eine CNC-gesteuerte Führungsmaschine sein. Die Steuerung des Führungssystems (nicht dargestellt) kommuniziert mit der Anordnung nach Figur 1. Im einfachsten Fall startet und beendet es den Betrieb des Plasmabrenners 2. Nach dem heutigen Stand der Technik werden jedoch eine Vielzahl von Signalen und Informationen, z. B. über Betriebszustände und Daten (Schneidstrom, Schneidspannung, Plasmabrenner-Werkstück-Abstand, Schneidgeschwindigkeit, Plasmagase, Sekundärgase, Fehlermeldungen usw.) ausgetauscht.

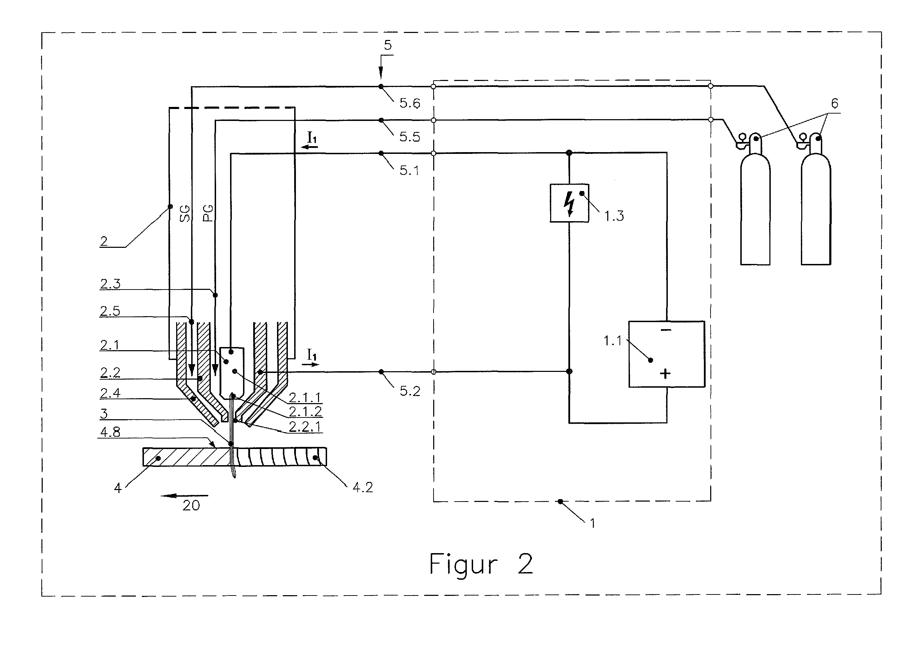

Die **Figur 2** zeigt eine Anordnung mit einem Plasmabrenner 2 in indirekter Betriebsweise. Dabei fließt der elektrische Strom I₁ von der Stromquelle 1.1 über die Leitung 5.1 zur Elektrode 2.1 hin und die Leitung 5.2 von der Düse 2.2 zurück zur Stromquelle 1.1.

Auch hier kann der Lichtbogen, der zwischen Elektrode 2.1 und Düse 2.2 zunächst mit geringem Strom (z.B. 10 A - 30 A) und damit geringer Leistung brennt, z.B. mittels elektrischer Hochspannung, die durch das Zündgerät 1.3 zur Verfügung gestellt wird, gezündet werden. Der Strom I₁ wird dann auf den gewünschten Endwert erhöht. Die Größe des maximal möglichen Stromes I₁ hängt dann sehr von der Belastbarkeit der Düse 2.2 ab. Der Lichtbogen brennt zwischen der Elektrode 2.1 und der Düse 2.2. Der Plasmastrahl 3 tritt aus der Düsenbohrung 2.2.1 aus und wird von dieser eingeschnürt und trifft auf das Werkstück 4 auf. So wird das Werkstück 4 auch der thermischen und kinetischen Wirkung des Plasmastrahls 3 ausgesetzt, die jedoch bei ähnlichen Leistungsparametern geringer als bei direkt betriebenen Plasmabrennern ist. Da die Düse 2.2 hier einen Lichtbogenansatzpunkt bildet, hier beispielhaft als Anode, wird sie auch der elektrischen Wirkung des Lichtbogens ausgesetzt.

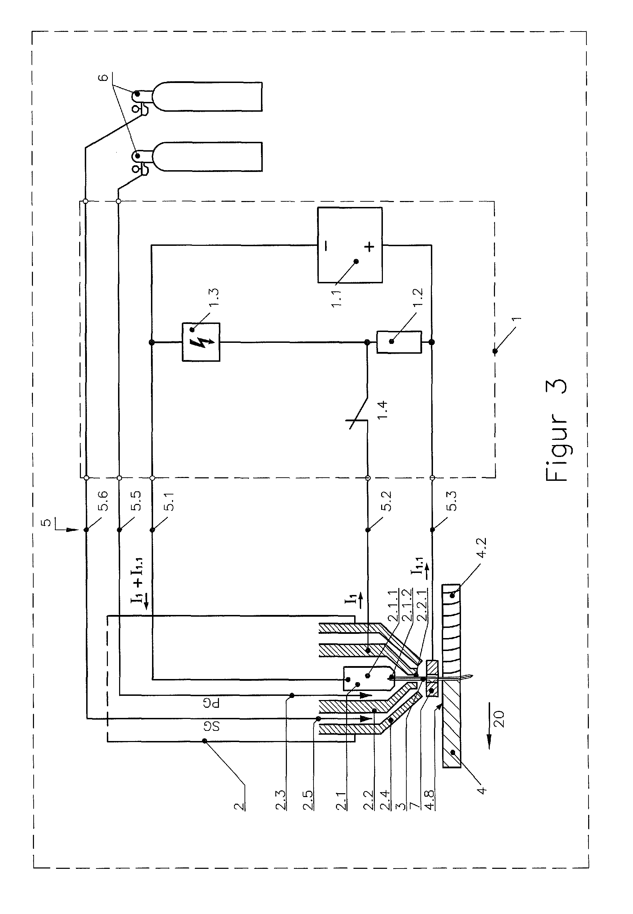

Ebenso ist es möglich, dass eine Zusatzelektrode 7 vorhanden ist, die anstelle der Düse 2.2 den elektrischen Strom zur Stromquelle 1.1 zurückführt, was beispielhaft in **Figur 3** dargestellt ist.

Die Zündung erfolgt, wie bei der direkten Betriebsweise, jedoch fließt kein Strom I₂ über das Werkstück 4 sondern der elektrische Strom I_{1.1} über die Zusatzelektrode 7 zur Stromquelle 1.1 zurück, die Zusatzelektrode 7 übernimmt hier die elektrische Funktion des Werkstücks 4. Der von der Düsenbohrung 2.2.1 der Düse 2.2 eingeschnürte Plasmastrahl 3 passiert vor seinem Auftreffen auf die Werkstückoberseite 4.8 die Zusatzelektrode 7, der Lichtbogen brennt zwischen der Elektrode 2.1 und der Zusatzelektrode 7. Von Vorteil gegenüber der Anordnung in Figur 2 ist dabei, dass die Düse 2.2 nicht so hoher Belastung ausgesetzt wird, da der elektrische Strom nicht über die Düse 2.2, sondern über die Zusatzelektrode 7 fließt. Der Lichtbogenansatzpunkt, hier beispielhaft die Anode, befindet sich auf der Zusatzelektrode 7. Der über die Zusatzelektrode 7 fließende elektrische Strom kann somit deutlich höher sein, als ein über die Düse 2.2 fließender elektrischer Strom. Hier sind Ströme auch größer 400 A möglich.

Die Zusatzelektrode 7 kann unterschiedlich ausgebildet sein. Vorteilhaft ist eine Ausführung mit einer Öffnung, durch die der Plasmastrahl 3 nach Austritt aus der Düsenbohrung 2.2.1 und/oder nach Verlassen der Düsenschutzkappe 2.4 strömt. Diese Öffnung bildet eine größere Fläche als die, die durch den kleinsten Düsenbohrungsdurchmesser d2.2.1 der Düse 2.2 gebildet wird. Vorteilhafterweise ist die Zusatzelektrode 7 aus einem gut thermisch leitendem Metall, z.B. Kupfer, das durch eine Flüssigkeit und/oder einen Gasstrom (z. B. Luft) gekühlt werden sollte, um dem Verschleiß zu minimieren.

Bei dieser Anordnung wird auch von indirekter Betriebsweise gesprochen, da kein elektrischer Strom über das Werkstück 4 zur Stromquelle 1.1 fließt.

Es ist auch eine Kombination der in den Figuren 1 bis 3 gezeigten Anordnungen möglich, um eine überwiegend direkte oder überwiegend indirekte Betriebsweise, die nachfolgend genauer beschrieben wird, zu realisieren. Dabei soll unter überwiegend ein größerer Zeitanteil und/oder Anteil an elektrischem Strom, mit der/dem ein Plasmabrenner in diesem Modus betrieben wird, verstanden sein. Der Anteil soll mehr als 50 % der für die Schneidbearbeitung erforderlichen Zeit und/oder des in Summe fließenden elektrischen Stromes in der jeweiligen Betriebsweise betragen, wenn ein Plasmabrenner in direkter oder indirekter Betriebsweise betrieben wird.

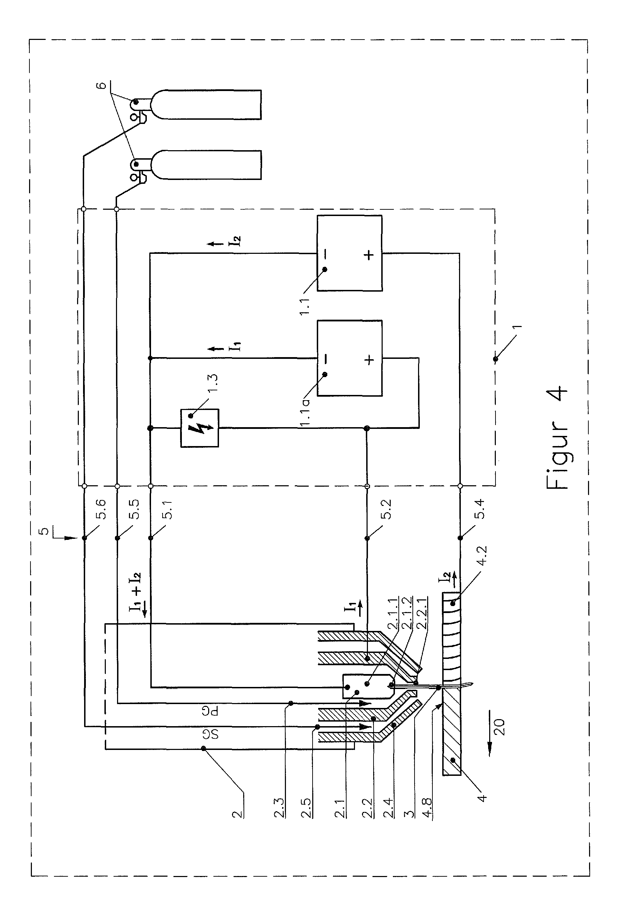

Die **Figur 4** zeigt eine Anordnung mit einem Plasmabrenner 2, die für eine direkte und indirekte Betriebsweise geeignet ist. Dabei fließt der gesamte elektrische Strom I₁ + I₂ von den Stromquellen 1.1 und 1.1a zur Elektrode 2.1 des Plasmabrenners 2 und davon ein erster elektrischer Teilstrom I₂ über den von der Düse 2.2 und der Düsenbohrung 2.2.1 eingeschnürten Plasmastrahl 3 zum Werkstück 4 und dann zurück zur Stromquelle 1.1, während ein zweiter elektrischer Teilstrom I₁ über die Düse 2.2 zurück zur Stromquelle 1.1a fließt. Überwiegend direkte Betriebsweise bedeutet, dass mehr als die Hälfte des durch die Elektrode 2.1 fließenden gesamten Stromes (I₁ + I₂) durch das Werkstück 4 (Strom I₂) zurück zur Stromquelle 1.1 fließt. Überwiegend indirekte Betriebsweise bedeutet, dass mehr als die Hälfte des durch die Elektrode 2.1 fließenden elektrischen Stromes (I₁ + I₂) nicht durch das Werkstück 4 zurück zur Stromquelle 1.2 fließt. In Figur 4 fließt dieser Strom I₁ über Düse 2.2 zur Stromquelle 1.1a zurück.

Einfacher ausgedrückt kann man sagen:
- Direkte Betriebsweise I₁ = 0
- Überwiegend direkte Betriebsweise: I₂ > I₁
- Indirekte Betriebsweise I₂ = 0
- Überwiegend indirekte Betriebsweise: I₂ < I₁

Es besteht auch die Möglichkeit, beide elektrischen Teilströme I₁ und I₂ aus einer Stromquelle 1.1. zu speisen, die Einstellung der Teilströme kann dann beispielsweise durch elektrische Widerstände oder elektronische Stellglieder (bspw. eine Transistorschaltung) erfolgen.

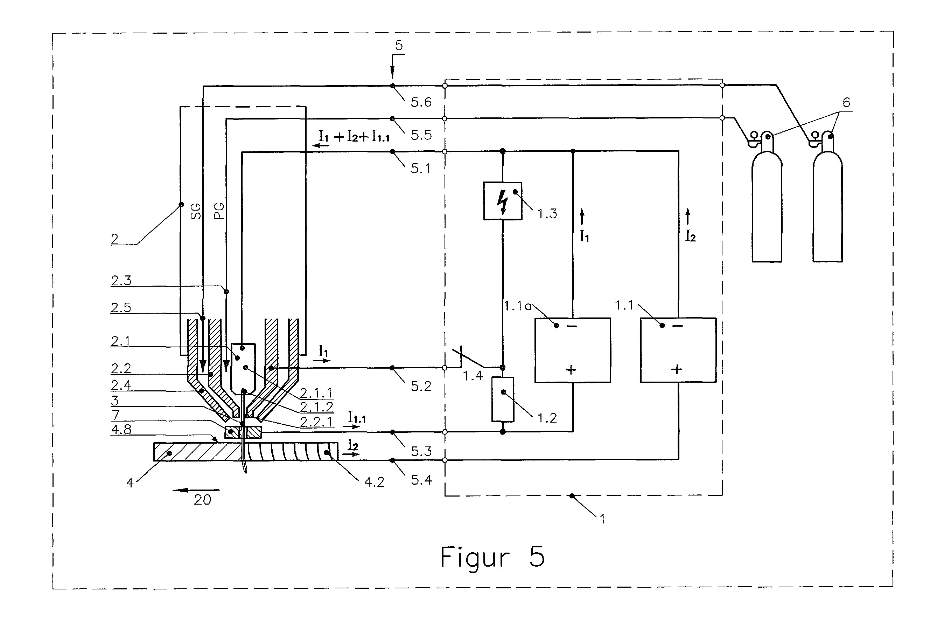

**Figur 5** zeigt ebenfalls eine Anordnung mit einem Plasmabrenner, die für eine direkte und indirekte Betriebsweise ausgebildet ist. Für den Prozess wird zunächst ein Pilotlichtbogen, der zwischen Elektrode 2.1 und Düse 2.2 mit geringem Strom I₁ (z.B. 10 A - 30 A) und damit geringer Leistung brennt, z. B. mittels Hochspannung, die durch das Zündgerät 1.3 zur Verfügung gestellt wird, gezündet. Der Strom I₁ des Pilotlichtbogens wird durch den elektrischen Widerstand 1.2 begrenzt. Dieser energiearme Pilotlichtbogen bereitet durch teilweise Ionisation die Strecke zwischen Plasmaschneidbrenner und der Zusatzelektrode 7 sowie dem Werkstück 4 für den Lichtbogen zwischen Elektrode 2.1 und Zusatzelektrode 7 sowie zwischen Elektrode 2.1 und Werkstück 4 vor. Berührt der Pilotlichtbogen die Zusatzelektrode 7, kommt es durch den vom Widerstand 1.2 erreichten Potenzialunterschied zwischen Düse 2.2 und der Zusatzelektrode 7 zur Ausbildung des Lichtbogens. Dieser brennt dann zwischen der Elektrode 2.1 und der Zusatzelektrode 7 mit meist größerem elektrischen Strom I_{1.1} und damit auch größerer Leistung. Der Schaltkontakt 1.4 wird geöffnet und die Düse 2.2 von der Stromquelle 1.1a potenzialfrei geschaltet. Der Strom I_{1.1} fließt dann von der Stromquelle 1.1a über die Elektrode 2.1, den Plasmastrahl 3 und die Zusatzelektrode 7 zurück zur Stromquelle 1.1a.

Zusätzlich bildet sich durch die Ionisation durch den Pilotlichtbogen zwischen Elektrode 2.1 und Düse 2.2 und/oder den Lichtbogen zwischen Elektrode 2.1 und Zusatzelektrode 7 eine weiterer Lichtbogen zwischen Elektrode 2.1 und Werkstück 4 aus, der Strom I₂ fließt dann von der Stromquelle 1.1 über die Elektrode 2.1, den Plasmastrahl 3 und das Werkstück 4 zur Stromquelle 1.1 zurück.

Überwiegend direkte Betriebsweise bedeutet, dass mehr als die Hälfte des durch die Elektrode 2.1 fließenden gesamten elektrischen Stromes (I_{1.1}+ I₂) durch das Werkstück 4 (Strom I₂) zurück zur Stromquelle 1.1 fließt. Überwiegend indirekte Betriebsweise bedeutet, dass mehr als die Hälfte des durch die Elektrode 2.1 fließenden elektrischen Stromes (I_{1.1}+ I₂) nicht durch das Werkstück 4 zurück zur Stromquelle 1.1 fließt. Wie in Figur 5 gezeigt fließt der Strom I_{1.1} über die Zusatzelektrode 7 zur Stromquelle 1.1a zurück.

Die Lichtbögen brennen also zwischen der Elektrode 2.1 und der Zusatzelektrode 7 (Strom I_{1.1}) sowie zwischen Elektrode 2.1 und Werkstück 4 (Strom I₂).

Von Vorteil gegenüber der Anordnung in Figur 4 ist es dabei, dass die Düse 2.2 nicht einer so hohen Belastung ausgesetzt wird, da der elektrische Strom nicht über die Düse 2.2 sondern über die Zusatzelektrode 7 fließt. Der über die Zusatzelektrode fließende Strom kann somit deutlich höher sein, als ein über die Düse fließender Strom. Hier sind Ströme auch größer 400 A möglich.

Es besteht weiterhin die Möglichkeit, dass auch nach Ausbildung der Lichtbögen zwischen der Elektrode 2.1 und der Zusatzelektrode 7 sowie der Zusatzelektrode 7 und dem Werkstück 4 weiterhin ein Lichtbogen zwischen der Elektrode 2.1 und der Düse 2.2 brennt und somit der Strom I₁ weiter fließt, beispielsweise wenn die Düse 2.2 nicht durch den Schaltkontakt 1.4 potenzialfrei geschaltet wird. Da der Strom I₁ auch einen indirekten Lichtbogen betreibt, wird zur Fallunterscheidung dieser Strom zum Strom I_{1.1} mit berücksichtigt.

Somit gilt für diese Anordnung:
- Direkte Betriebsweise I₁= I_{1.1}= 0
- Überwiegend direkte Betriebsweise: I₂ > (I₁+I_{1.1})
- Indirekte Betriebsweise I₂ = 0
- Überwiegend indirekte Betriebsweise: I₂ < (I₁+I_{1.1})

In den Figuren 1 bis 5 sind die Elektroden 2.1 jeweils als Katode, also an den Minuspol (-) der elektrischen Stromquelle 1.1 oder 1.1a angeschlossen. Die Düse 2.2, die Zusatzelektrode 7 und/oder das Werkstück 4 bilden dann gegenüber der Elektrode 2.1 die Anode(n) und sind an den Pluspol (+) der jeweiligen Stromquellen 1.1 oder 1.1a angeschlossen.

Es ist auch möglich, die Elektroden 2.1 an den Pluspol (+) der Stromquellen 1.1 oder 1.1a anzuschließen und damit als Anode zu betreiben. Demzufolge sind dann die Düse 2.2, die Zusatzelektrode 7 und/oder das Werkstück 4 gegenüber der Elektrode 2.1 die Kathode(n) und sind an den Minuspol (-) der Stromquellen 1.1 oder 1.1a angeschlossen.

Bei Plasmabrennern können so, anders als in den Darstellungen in den Figuren 1 bis 5 gezeigt, sowohl die Elektrode 2.1 als auch die Düse 2.2 als Kathode oder Anode betrieben werden. Ebenso ist auch der Betrieb mit Wechselstrom und damit ein ständiger Wechsel zwischen Kathode und Anode möglich.

**Figur 6** zeigt schematisch die Anordnung von zwei erfindungsgemäßen Plasmabrennern 2a und 2b zum Schneiden eines Werkstücks 4, hier beispielsweise Baustahl der Sorte S235JR nach EN 10025. Dabei schneidet der erste Plasmabrenner 2a das Werkstück 4. Dieser Plasmabrenner 2a wird direkt oder überwiegend direkt betrieben, während der zweite Plasmabrenner 2b indirekt oder überwiegend indirekt betrieben wird. Der Plasmabrenner 2a läuft dem Plasmabrenner 2b bezogen auf die Bewegungsrichtung 20 der beiden Plasmabrenner 2a, 2b vor. Der Plasmastrahl 3b des zweiten Plasmabrenners 2b ist in die vom Plasmastrahl 3a des ersten Plasmabrenners 2a ausgebildete Schnittfuge 4.1, die die Breite b1 hat, hinein geführt. Der Plasmastrahl 3b des zweiten Plasmabrenners 2b erwärmt zumindest eine Schnittfläche 4.2 oder 4.3 **(****Figur 6a****)** so, dass die durch das Schneiden mit dem ersten Plasmabrenner 2a verursachte Aufhärtung der Schnittfläche 4.2 und/oder 4.3, die über 400 (HV 10) betragen kann, von einem hohen Wert auf einen niedrigeren Wert reduziert wird. Nach der Norm EN 1090-2 muss die Aufhärtung auf einen Wert von unter kleiner/gleich 380 (HV 10) reduziert werden, besser ist jedoch eine deutlich größere Reduzierung auf einen Wert von unter 340 (HV 10), damit verfahrensbedingte Schwankungen nicht zum Überschreiten der zulässigen Höchstwerte führen.

Es ist vorteilhaft, wenn beide Plasmabrenner 2a und 2b mit einer ähnlich hohen Geschwindigkeit gegenüber dem Werkstück 4 in Richtung 20 bewegt werden, um die hohe Produktivität des Plasmaschneidens beizubehalten. Der Unterschied der Geschwindigkeiten soll dabei nicht größer 20%, vorteilhafterweise nicht größer 10% sein und am besten ist es, wenn die Geschwindigkeiten gleich groß sind.

Nach dem Schneiden sind in der Regel zumindest zwei Teile 4.4 und 4.5 aus dem Werkstück 4 entstanden.

Die **Figur 6a** zeigt die Ansicht A der Figur 6 auf das Werkstück 4 mit der Schnittfuge 4.1. Dabei zeigt die Schnittfläche 4.2 der Schnittfuge 4.1 einer eine geringere Rechtwinkligkeits- und Neigungstoleranz nach DIN EN ISO 9013 als die Schnittfläche 4.3. Die beiden durch das Schneiden entstehenden Teile 4.4 und 4.5 weisen so unterschiedliche Rechtwinkligkeits- und Neigungstoleranz auf. Das Teil 4.4 ist dann das Teil, das weiter verarbeitet wird, während das Teil 4.5 zum Ausschneiden weiterer Teile verwendet werden kann oder ein Abfallteil ist. Die Ursache für die unterschiedliche Neigung ist die Rotation des Plasma und/oder Sekundärgases.

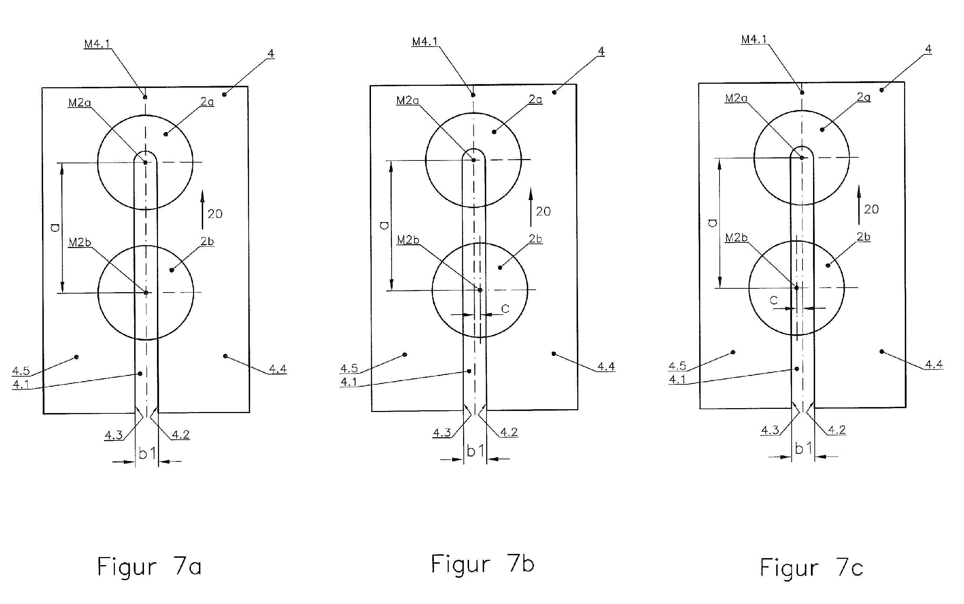

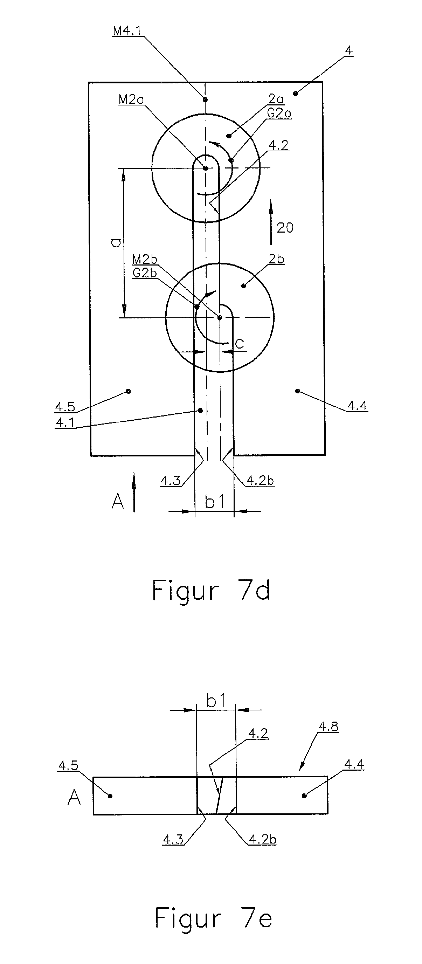

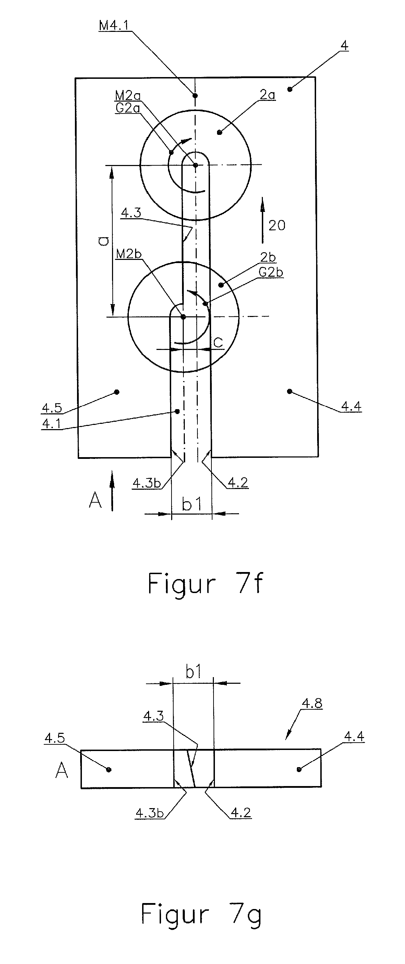

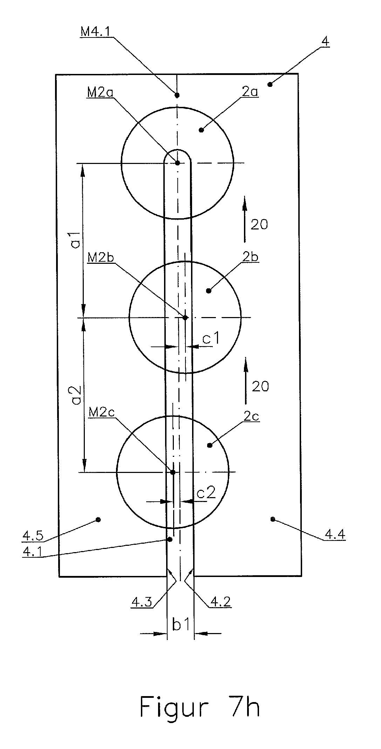

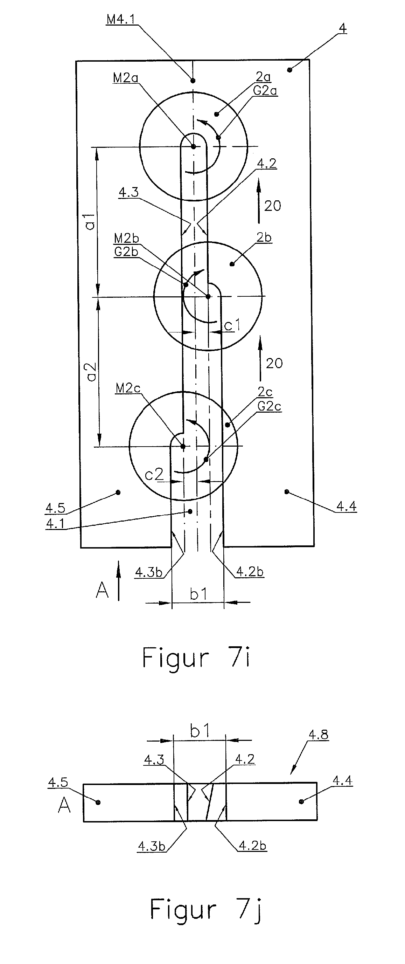

Die **Figuren 7a bis 7d****,** **7f** **sowie** **7h** **und** **7i** zeigen schematisch die Ansicht von oben auf beispielhafte Anordnungen der Plasmabrenner 2a, 2b und 2c und das Werkstück 4. Die **Figuren 7e****,** **7g** **und** **7j** zeigen die Ansichten A der Figuren 7d, 7f und 7i.

In **Figur 7a** läuft der erste Plasmabrenner 2a dem Plasmabrenner 2b bezogen auf die Bewegungsrichtung 20 der Plasmabrenner 2a, 2b mit dem Abstand a vor und schneidet das Werkstück 4, die Schnittfuge 4.1 mit der Breite b1,auf der Werkstückoberseite gemessen, wird ausgebildet. Der Abstand a soll der Abstand zwischen den Mittel- oder Flächenschwerpunkten der Düsen 2.2a und 2.2b der Plasmabrenner 2a und 2 b oder der Mittellinien M2a, M2b; M2c der Düsenbohrungen 2.2.1a; 2.2.1b, 2.2.1c sein. Der Plasmastrahl 3b des zweiten Plasmabrenners 2b ist in die Schnittfuge 4.1 hinein geführt (siehe auch Figur 6). Die Mittellinien M2a und M2b der Düsenbohrungen 2.2.1a und 2.2.1b der Düsen 2.2a und 2.2b der Plasmabrenner 2a und 2b werden dabei auf einer gleichen oder nahezu gleichen Kontur oder Linie entsprechend ihrer Vorschubachsrichtung(en) geführt, die beispielhaft als Linie M4.1 dargestellt ist. Diese Linie kann auch die Mittellinie der Schnittfuge 4.1 bilden. In den Figuren 7a bis 7c ist eine geradlinige Vorschubbewegung gezeigt. Es kann aber auch eine gekrümmte Vorschubbewegung durchgeführt werden, die dann von beiden Plasmabrennern 2a und 2b in möglichst nahezu gleicher Form durchgeführt werden sollte.

Der Plasmabrenner 2a wird direkt oder vorwiegend direkt betrieben, der Plasmabrenner 2b wird indirekt oder über- bzw. vorwiegend indirekt, kann aber auch direkt oder über- bzw. vorwiegend direkt betrieben werden.

In den Figuren **7b und 7c** ist zusätzlich zum Abstand a in Bewegungsrichtung (Vorschubachsrichtung) 20 ein als Versatz c bezeichneter Abstand senkrecht zur Bewegungsrichtung 20 zwischen dem ersten Plasmabrenner 2a und dem zweiten Plasmabrenner 2b dargestellt, so dass sich der Plasmastrahl 3b des zweiten Plasmabrenners 2b dichter, also mit kürzerem Abstand zu einer der von der Schnittfuge 4.1 gebildeten Schnittflächen 4.2 (Figur 7b) oder 4.3 (Figur 7c) angeordnet ist. Damit wirkt der Plasmastrahl 3b des zweiten Plasmabrenners 2b stärker auf diese näher liegende Schnittfläche 4.2 (Figur 7b) oder 4.3 (Figur 7c) ein. Reicht der thermische Einfluss auf die weiter entfernte Schnittfläche 4.3 (Figur 7b) oder 4.2 (Figur 7c) aus, um die Aufhärtung zu reduzieren, ist es dann besonders vorteilhaft, da der kinetische Einfluss des Plasmastrahls 3b dann sehr gering auf die Qualität dieser jeweiligen Schnittfläche ist und so eine geringe Rechtwinkligkeits- und Neigungstoleranz sowie geringe Rauigkeit nach DIN EN ISO 9013 erreicht werden können.

Der Plasmabrenner 2a wird direkt oder über- bzw. vorwiegend direkt betrieben, der Plasmabrenner 2b wird indirekt oder über- bzw. vorwiegend indirekt, kann aber auch direkt oder über- bzw. vorwiegend direkt betrieben.

Wird der zweite Plasmabrenner 2b indirekt oder über-bzw. vorwiegend indirekt betrieben, ist eine Rotation der Plasmagases oft störend, da im Gegensatz zu den in Figuren 7d bis 7g dargestellten Ausführungsformen kein Abtrag an einer der beiden Schnittflächen erfolgen soll. Ebenso ist oft ein Sekundärgas nicht notwendig.

In den Figuren **7d bis 7g** ist der senkrecht zur Bewegungsrichtung (Vorschubachsrichtung) 20 gebildete Abstand c zwischen den Düsenmittelpunkten des ersten Plasmabrenners 2a und des zweiten Plasmabrenners 2b so groß, dass sich der Plasmastrahl 3b des zweiten Plasmabrenners 2b sehr dicht und so mit kleinerem Abstand an einer der von der Schnittfuge 4.1 gebildeten Schnittfläche 4.2 (Figur 7d) oder 4.3 (Figur 7f) angeordnet ist bzw. auf diese jeweilige Schnittfläche trifft. Damit wirkt der Plasmastrahl 3b des zweiten Plasmabrenners 2b so stark auf die Schnittfläche 4.2 (Figur 7d) oder 4.3 (Figur 7f), dass diese abgetragen wird und eine breitere Schnittfuge 4.1 ausgebildet wird.

Von Vorteil für die beiden letztlich entstehende Schnittflächen 4.3 und 4.2b gemäß Figur 7e sowie 4.2 und 4.3b in Figur 7g ist es, wenn die Rotation G2a des Plasmagases PG des ersten Plasmabrenners 2a entgegengesetzt zur Rotation G2b der Plasmagases PG des zweiten Plasmabrenners 2b erfolgt. Ebenso ist es von Vorteil, wenn die Rotation der Sekundärgases SG des ersten Plasmabrenners 2a entgegengesetzt zur Rotation des Sekundärgases des zweiten Plasmabrenners 2b erfolgt. Ebenso ist es von Vorteil wenn die Rotationsrichtung G2a; G2b des Plasmagases PG und des Sekundärgases SG ein und desselben Plasmabrenners gleich gerichtet sind. Durch die Rotation des Plasma- und des Sekundärgases kann die Rechtwinkligkeits- und Neigungstoleranz beeinflusst werden. Da so in der Regel unterschiedlich geneigte Schnittflächen an den beiden Teilen 4.4; 4.5 des Werkstücks 4 in Abhängigkeit von der Bewegungsrichtung Vorschubachsrichtung 20 des Plasmabrenners ausgebildet werden, ist es vorteilhaft, wenn beide Plasmabrenner 2a und 2b so ausgebildet sind oder betrieben werden, dass zueinander entgegengesetzte Rotationsrichtungen der Plasma- und Sekundärgase erreicht werden, um an den letztlich entstehenden Schnittflächen 4.3 und 4.2b in Figur 7e sowie 4.2 und 4.3b in Figur 7g eine geringe Rechtwinkligkeits- und Neigungstoleranz zu erreichen.

In den **Figuren 7d** **und** **7f** sind die Rotationsrichtungen G1a und G2a des Plasmagases PG und/oder des Sekundärgases SG schematisch dargestellt.

In Figur 7d bildet der Plasmabrenner 2a zunächst die Schnittfuge 4.1 aus, wobei die Schnittfläche 4.3 eine geringe Rechtwinkligkeits- und Neigungstoleranz aufweist, während die zunächst ausgebildete gegenüberliegende Schnittfläche 4.2 stärker geneigt ist. Der Plasmabrenner 2b bildet dann die zweite endgültige Schnittfläche 4.2b, die ebenfalls eine und gegenüber der vorher ausgebildeten Schnittfläche eine reduzierte Rechtwinkligkeits- und Neigungstoleranz aufweist, aus. Die reduzierte geringe Neigung der Schnittflächen 4.3 und 4.2b sowie die stärkere Neigung der Schnittfläche 4.2 in Bezug zur parallel zu einer senkrecht durch das Werkstück 4 ausgerichteten Achse sind **in** **Figur 7e** gezeigt.

In **Figur 7f** bildet der Plasmabrenner 2a zunächst die Schnittfuge 4.1 aus, wobei die Schnittfläche 4.2 eine geringe Rechtwinkligkeits- und Neigungstoleranz aufweist, während die zunächst gegenüberliegende Schnittfläche 4.3 stärker geneigt ist. Der Plasmabrenner 2b bildet dann die zweite endgültige Schnittfläche 4.3b aus, die ebenfalls eine geringe/reduzierte Rechtwinkligkeits- und Neigungstoleranz aufweist. Die geringe/reduzierte Neigung der Schnittflächen 4.2 und 4.3b sowie die stärkere Neigung der Schnittfläche 4.3 in Bezug zur parallel zu einer senkrecht durch das Werkstück 4 ausgerichteten Achse sind in **Figur 7g** gezeigt.

Es ist weiterhin von Vorteil, wenn die Richtungen der Rotation des Plasmaund/oder Sekundärgases und die Richtung der Bewegung/Vorschubachsrichtung 20 der Plasmabrenner 2a und 2b auf der Seite der Schnittfuge 4.1, deren Schnittfläche eine geringe Rechtwinkligkeits- und Neigungstoleranz aufweisen soll, zueinander entgegengesetzt sind. In den Figuren 7d und 7e trifft dies für den Plasmabrenner 2a mit der Rotationsrichtung G2a und die Schnittfläche 4.3 sowie für den Plasmabrenner 2b mit der Rotationsrichtung G2b und die Schnittfläche 4.2b zu.

In den Figuren 7g und 7h trifft dies für den Plasmabrenner 2a mit der Rotationsrichtung G2a und die Schnittfläche 4.2 sowie für den Plasmabrenner 2b mit der Rotationsrichtung G2b und die Schnittfläche 4.3b zu.

Der Plasmabrenner 2a wird direkt oder über- bzw. vorwiegend direkt betrieben, der Plasmabrenner 2b wird indirekt oder über- bzw. vorwiegend indirekt, kann aber auch direkt oder vorwiegend direkt betrieben.

Es ist auch möglich, wie nachfolgend gezeigt, dem ersten Plasmabrenner 2a mehrere Plasmabrenner 2b und 2c parallel zu dessen Vorschubachsrichtung 20 nachlaufen zu lassen.

In **Figur 7h** läuft beispielhaft der erste Plasmabrenner 2a dem zweiten Plasmabrenner 2b und dem dritten Plasmabrenner 2c bezogen auf die Bewegungsrichtung/Vorschubachsrichtung 20 der Plasmabrenner 2a, 2b, 2c mit dem Abstand a1 (zwischen dem ersten 2a und zweiten Plasmabrenner 2b) und mit dem Abstand a1+a2 (zwischen dem ersten 2a und dritten Plasmabrenner 2c) vor und schneidet das Werkstück 4, so dass die Schnittfuge 4.1 mit der Breite b1 ausgebildet wird. Der Plasmastrahl 3b des zweiten Plasmabrenners 2b und der Plasmastrahl 3c des dritten Plasmabrenners 2c ist in die

Schnittfuge 4.1 hinein geführt (siehe auch Figur 6).

Zusätzlich zu den Abständen a1 und a2 ist ein Abstand c1 senkrecht zur Bewegungsrichtung 20 zwischen dem ersten Plasmabrenner 2a und dem zweiten Plasmabrenner 2b sowie ein Abstand c2 senkrecht zur Bewegungsrichtung 20 zwischen dem ersten Plasmabrenner 2a und dem dritten Plasmabrenner 2c vorhanden, so dass sich der Plasmastrahl 3b des zweiten Plasmabrenners 2b dichter und mit kleinerem Abstand an der von der Schnittfuge 4.1 gebildeten Schnittfläche 4.2 und der Plasmastrahl 3c des dritten Plasmabrenners 2c dichter und mit kleinerem Abstand an einer der von der Schnittfuge 4.1 gebildeten Schnittfläche 4.3 angeordnet ist. Damit wirkt der Plasmastrahl 3b des zweiten Plasmabrenners 2b stärker auf die Schnittfläche 4.2 und der Plasmabrenner 2c stärker auf die Schnittfläche 4.3 ein.

Die Mittellinien M2a, M2b und M2c der Düsenbohrungen 2.2.1a, 2.2.1b und 2.2.1c (nicht dargestellt) der Düsen 2.2a, 2.2b und 2.2c (nicht dargestellt), der Plasmabrenner 2a, 2b und 2c können aber auch auf bzw. entlang einer gleichen oder nahezu gleichen Kontur oder Linie, die beispielhaft als Linie M4.1 dargestellt ist, bewegt werden.

Da auf jeder Schnittfläche 4.2; 4.3 ein weiterer Plasmabrenner 2b; 2c "nachläuft" wird an beiden Schnittflächen 4.2 und 4.3 die Härte des Werkstoffs ähnlich verringert, was vorteilhaft ist, wenn beide Teile 4.4; 4.5 nach dem Schneiden weiter verarbeitet werden sollen.

In der Figur 7i und 7j ist der senkrecht zur Bewegungsrichtung/Vorschubachsrichtung 20 gebildete Abstand c1 zwischen dem ersten Plasmabrenner 2a und dem zweiten Plasmabrenner 2b (Abstände der MitteIlinien M2a, M2b er Düsenbohrungen 2.2.1a, 2.2.1b, der Düsen 2.2a, 2.2b) und der senkrecht zur Bewegungsrichtung 20 gebildete Abstand c2 zwischen dem ersten Plasmabrenner 2a und dem dritten Plasmabrenner 2c bzw. der Mittellinien M2a und M2c der Düsenbohrungen 2.2.1a und 2.2.1c, der Düsen 2.2a und 2.2c der Abstand so groß, so dass der Plasmastrahl 3b des zweiten Plasmabrenners 2b sehr dicht/nah an der von der Schnittfuge 4.1 zunächst gebildeten Schnittfläche 4.2 angeordnet ist, diese abträgt und eine neue Schnittfläche 4.2b ausbildet. Der Plasmastrahl 3c des dritten Plasmabrenners 2c ist sehr dicht/nah an der von der Schnittfuge 4.1 zunächst gebildeten Schnittflächen 4.3 angeordnet. Er trägt diese ab und eine neue Schnittfläche 4.3b wird dadurch ausgebildet. Es wird eine breitere Schnittfuge 4.1 ausgebildet.

Von Vorteil für die beiden letztlich entstehenden Schnittflächen 4.2b; 4.3b ist es, wenn die Rotation G2b des Plasmagases PG des zweiten Plasmabrenners 2b entgegengesetzt zur Rotation G2c der Plasmagases PG des dritten Plasmabrenners 2c ausgerichtet ist. Ebenso ist es von Vorteil, wenn die Rotation der Sekundärgases SG des zweiten Plasmabrenners 2b entgegengesetzt zur Rotation des Sekundärgases des dritten Plasmabrenners 2c ausgebildet ist. Ebenso ist es von Vorteil, wenn die Rotationsrichtungen G2a; G2b; G2c des Plasmagases PG und des Sekundärgases SG ein und desselben Plasmabrenners gleich gerichtet sind. Durch die Rotation des Plasma- und des Sekundärgases kann die Rechtwinkligkeits- und Neigungstoleranz vorteilhaft beeinflusst werden. Da so in der Regel unterschiedlich geneigte Schnittflächen 4.2 und 4.3 an den beiden Teilen 4.4; 4.5 des Werkstücks 4 in Abhängigkeit von der Bewegungsrichtung des Plasmabrenners 2a ausgebildet werden, ist es vorteilhaft, wenn der zweite und der dritte Plasmabrenner 2b und 2c entgegengesetzte Rotationsrichtungen der Plasma- und Sekundärgase aufweisen, um an den letztlich ausgebildeten Schnittflächen 4.2b und 4.3b eine geringe Rechtwinkligkeitsund Neigungstoleranz zu erreichen.

Da auf jeder Schnittfläche 4.2; 4.3 ein weiterer Plasmabrenner 2b; 2c "nachläuft" wird auf beiden neu entstehenden Schnittflächen 4.2b; 4.3b die Härte des Werkstoffs ähnlich verringert, was vorteilhaft ist, wenn beide Teil 4.5; 4.5 nach dem Schneiden weiter verarbeitet werden sollen.

In der **Figur 7i** sind die Rotationsrichtungen G2a, G2b und G3a des Plasmagases PG und des Sekundärgases SG schematisch dargestellt.

Der Plasmabrenner 2a schneidet zunächst die Schnittfuge 4.1, wobei die Schnittfläche 4.3 eine geringe Rechtwinkligkeits- und Neigungstoleranzabweichung aufweist, während die zunächst ausgebildete gegenüberliegende Schnittfläche 4.2 stärker geneigt ist. Der Plasmabrenner 2b bildet dann die erste endgültige Schnittfläche 4.2b und der dritte Plasmabrenner 2c die zweite endgültige Schnittfläche 4.3b, die beide eine geringe Rechtwinkligkeits- und Neigungstoleranz aufweisen, aus. Die geringe Neigung der Schnittflächen 4.3, 4.3b und 4.2b sowie die stärkere Neigung der Schnittfläche 4.2 in Bezug zur parallel zu einer senkrecht durch das Werkstück 4 ausgerichteten Achse sind in **Figur 7j** gezeigt.

Es ist weiterhin von Vorteil, wenn die Richtungen der Rotation des Plasmaund/oder Sekundärgases und die Richtung der Bewegung/Vorschubachsrichtung 20 des Plasmabrenners auf der Seite der Schnittfuge, deren Schnittfläche eine geringe Rechtwinkligkeits- und Neigungstoleranz aufweisen soll, entgegengesetzt zueinander ausgerichtet sind. In den Figuren 7i und 7j trifft dies für den Plasmabrenner 2b mit der Rotationsrichtung G2b und die Schnittfläche 4.2b sowie für den Plasmabrenner 2c mit der Rotationsrichtung G2c und die Schnittfläche 4.3b zu.

Die Rotationsrichtung des Plasmagases und Sekundärgases des ersten Plasmabrenners 2a ist von geringer oder keiner Bedeutung, da die fertig ausgebildeten Schnittflächen 4.2b und 4.3b vor allem durch den zweiten und dritten Plasmabrenner 2b und 2c beeinflusst werden.

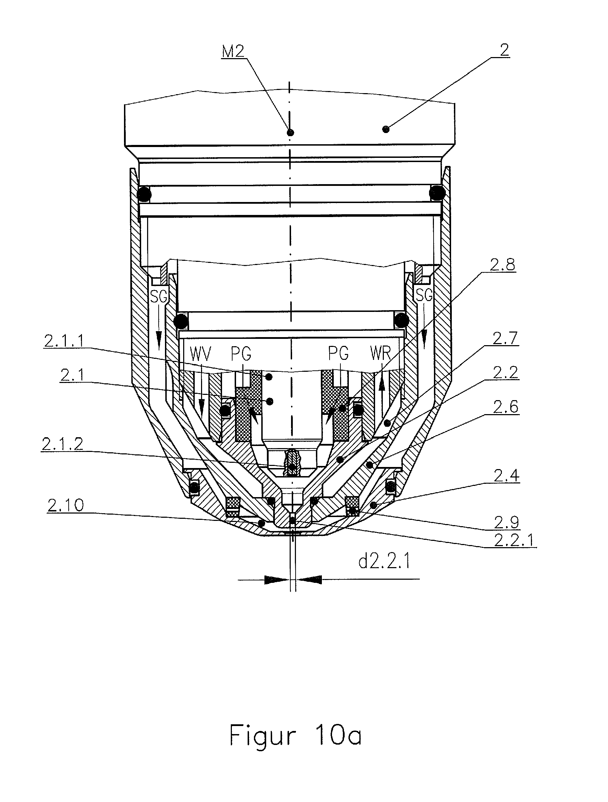

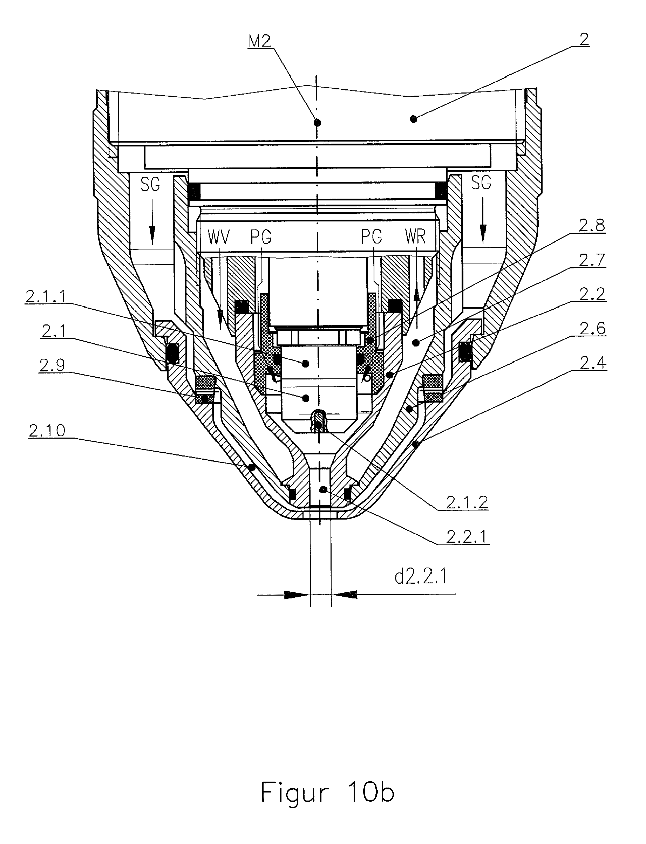

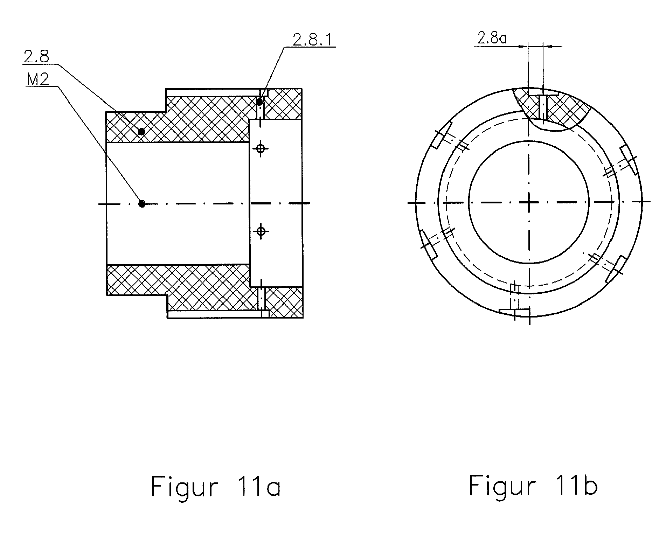

Die Rotation der Gase kann durch Gasführungen, wie auch in den Figuren 10a und 10b, für das Plasmagasführungsteil 2.8 sowie in den Figuren 11a und 11b für das Sekundärgasführungsteil 2.9 gezeigt, durch Öffnungen oder Bohrungen, die radial versetzt angeordnet sind, erreicht werden.

Es sind unterschiedliche Kombinationen der Abstände a1, a2 in Bewegungsrichtung/Vorschubachsrichtung 20 und der Abstände c1, c2 senkrecht zur Bewegungsrichtung/Vorschubachsrichtung 20 der Plasmabrenner 2a, 2b, 2c möglich.

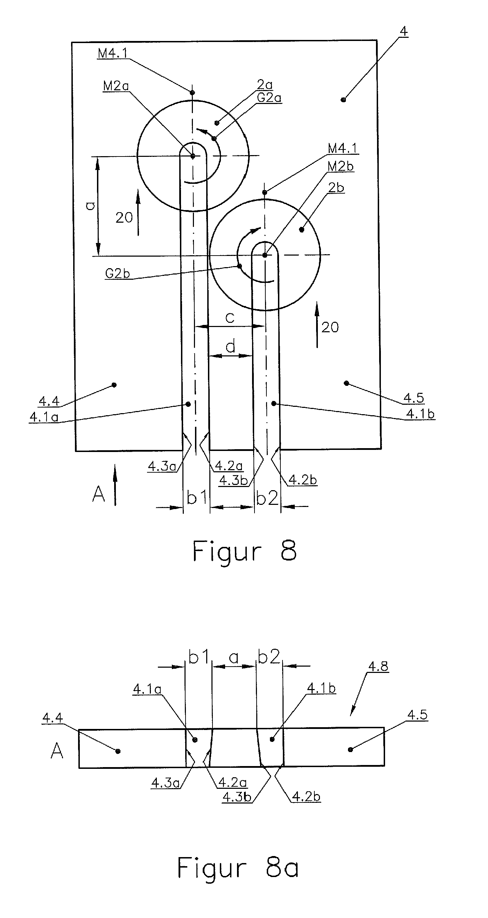

Die **Figur 8** zeigt schematisch die Ansicht von oben auf die Plasmabrenner 2a, 2b und das Werkstück 4. Dabei läuft der erste Plasmabrenner 2a dem Plasmabrenner 2b bezogen auf die Bewegungsrichtung/Vorschubachsrichtung 20 der Plasmabrenner 2a, 2b mit dem Abstand a vor und schneidet das Werkstück 4, die Schnittfuge 4.1a mit der Breite b1 (auf Werkstückoberseite gemessen) wird ausgebildet.

Zusätzlich zum Abstand a ist ein Abstand c senkrecht zur Bewegungsrichtung/Vorschubachsrichtung 20 zwischen dem ersten Plasmabrenner 2a und dem zweiten Plasmabrenner 2b vorhanden. Der Abstand c ist so groß, dass auch der zweite Plasmabrenner 2b das Werkstück 4 schneidet und eine Schnittfuge 4.1b ausbildet. Dabei werden zwei Schnittfugen 4.1a und 4.1b im Werkstück 4 ausgebildet, die bevorzugt parallel zueinander verlaufen. Es ist von Vorteil, wenn der minimale Abstand d der mittleren Längsachsen der Schnittfugen 4.1.a und 4.1.b auf der Oberseite 4.8 des Werkstücks 4 der benachbarten Schnittflächen 4.2a und 4.3b der Schnittfugen 4.1a und 4.1b wenigstens der halben Breite b1; b2 der schmaleren Schnittfuge 4.1a; 4.1b auf der Werkstückoberseite gemessen beträgt. Es ist von Vorteil, wenn der minimale Abstand d auf der Oberseite 4.8 des Werkstücks 4 der benachbarten Schnittflächen 4.2a und 4.3b der Schnittfugen 4.1a und 4.1b maximal dem zehnfachen, vorteilhafterweise dem sechsfachen Wert, noch besser dem maximal dreifachen der Breite b1; b2 der breiteren Schnittfuge 4.1a oder 4.1b, gemessen an der Werkstückoberseite, beträgt.

Von Vorteil für die beiden Schnittflächen 4.2b; 4.3b der entstehenden Teile 4.4 und 4.5 des Werkstücks 4 ist es, wenn die Rotation G2a des Plasmagases PG des ersten Plasmabrenners 2a entgegengesetzt zur Rotation G2b der Plasmagases PG des zweiten Plasmabrenners 2b ist. Ebenso ist es von Vorteil, die Rotation der Sekundärgases SG des ersten Plasmabrenners 2a entgegengesetzt zur Rotation des Sekundärgases des zweiten Plasmabrenners 2b zu wählen.

Ebenso ist es von Vorteil, wenn die Rotationsrichtungen G2a; G2b des Plasmagases PG und des Sekundärgases SG ein und desselben Plasmabrenners gleich gerichtet sind.

Durch die Rotation des Plasma- und des Sekundärgases wird wesentlich die Rechtwinkligkeits- und Neigungstoleranz/-abweichung beeinflusst. Da so in der Regel unterschiedlich geneigte Schnittflächen 4.2a; 4.3a sowie 4.2b; 4.3b in Abhängigkeit von der Bewegungsrichtung/Vorschubachsrichtung des Plasmabrenners ausgebildet werden können, ist es vorteilhaft, wenn Rotationsrichtungen der Plasma- und Sekundärgase eines Plasmabrenners gleich gerichtet, aber die der Plasmabrenner zueinander entgegengesetzt gerichtet sind, um die höchste Qualität (geringe Rechtwinkligkeits- und Neigungstoleranz/-abweichung) der jeweiligen Schnittfläche, hier beispielhaft 4.3a und 4.2b, zu erreichen. In Figur 8 sind die Rotationsrichtungen G1a und G2a des Plasmagases PG und des Sekundärgases SG schematisch dargestellt.

Die **Figur 8a** zeigt die Ansicht A der Figur 8 auf das Werkstück 4 mit den Schnittfugen 4.1a und 4.1b. Dabei zeigt die Schnittfläche 4.3a der Schnittfuge 4.1a einer eine geringere Rechtwinkligkeits- und Neigungstoleranz/- abweichung nach DIN EN ISO 9013 als die Schnittfläche 4.2a und die Schnittfläche 4.2b der Schnittfuge 4.1b eine geringere Rechtwinkligkeits- und Neigungstoleranz/-abweichung nach DIN EN ISO 9013 als die Schnittfläche 4.3b. Die beiden durch das Schneiden entstehenden Teile 4.4 und 4.5 weisen so eine geringe Rechtwinkligkeits- und Neigungstoleranz/-abweichung auf, während das zwischen den Schnittfugen entstandene Teil 4.9, in diesem Fall als "Abfallteil", mit seinen Schnittflächen 4.2a und 4.3b, eine höhere Rechtwinkligkeits- und Neigungstoleranz/-abweichung aufweist.

Es ist weiterhin von Vorteil, die Richtungen der Rotation des Plasmaund/oder Sekundärgases und der Bewegung 20 des Plasmabrenners auf der Seite der Schnittfuge, deren Schnittfläche, eine geringe Rechtwinkligkeits- und Neigungstoleranz/-abweichung aufweisen soll, entgegengesetzt gerichtet zu wählen. In den Figuren 8 und 8a trifft dies für den Plasmabrenner 2a mit der Rotationsrichtung G2a und die Schnittfläche 4.3a sowie für den Plasmabrenner 2b mit der Rotationsrichtung G2b und die Schnittfläche 4.2b zu.

Die Rotation der Gase kann durch Gasführungen, wie auch in den Figuren 10a und 10b, für das Plasmagasführungsteil 2.8 sowie in den Figuren 11a und 11b für das Sekundärgasführungsteil 2.9 gezeigt, durch Bohrungen, die radial versetzt angeordnet sind, beeinflusst werden.

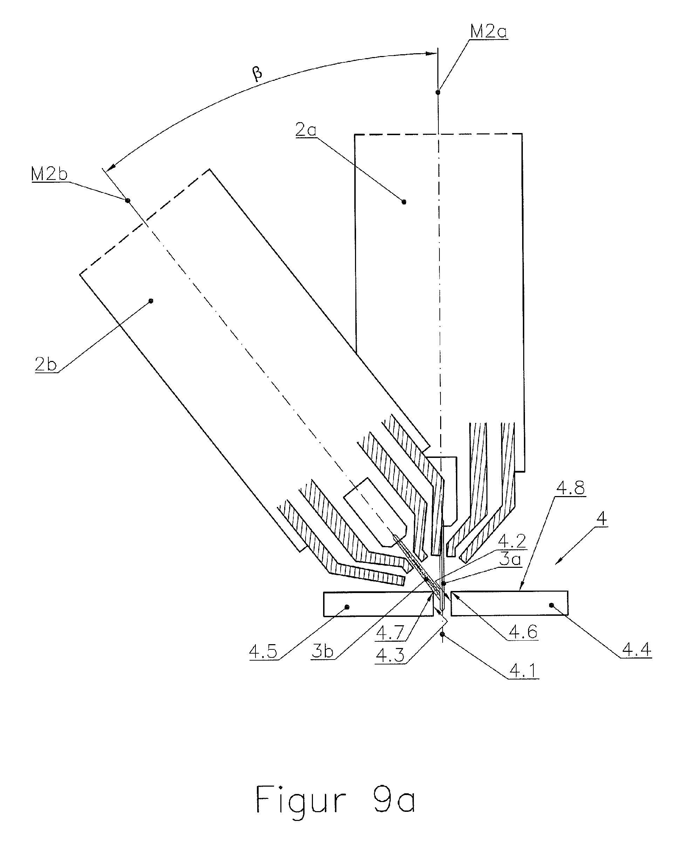

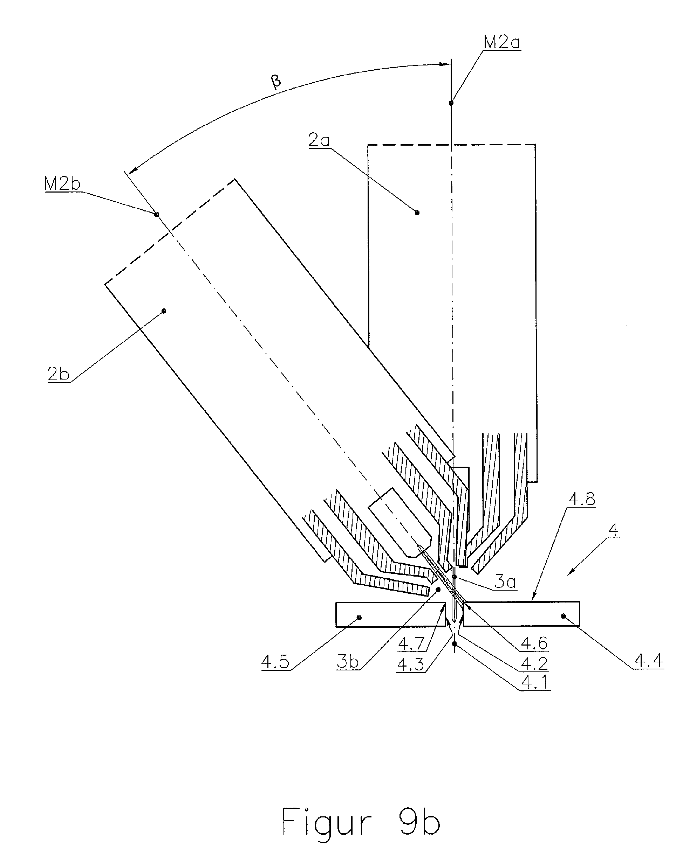

Die **Figur 9a** **und** **9b** zeigen schematisch eine erfindungsgemäße Anordnung von zwei Plasmabrennern 2a und 2b zum Schneiden eines Werkstücks 4. Dabei schneidet der erste Plasmabrenner 2a das Werkstück 4. Dieser Plasmabrenner 2a wird direkt oder überwiegend direkt betrieben, während der zweite Plasmabrenner 2b indirekt oder überwiegend indirekt betrieben wird. Der erste Plasmabrenner 2a läuft dem zweiten Plasmabrenner 2b bezogen auf die Bewegungsrichtung/Vorschubachsrichtung 20 der Plasmabrenner 2a, 2b vor, so dass Werkstoff des Werkstücks 4 zuerst vom Plasmabrenner 2a zum Schneiden entfernt und die Schnittfuge 4.1 damit ausgebildet wird. Die Mittellinie M2b der Düsenbohrung 2.2.1b des zweiten Plasmabrenners 2b ist zur Mittellinie M2a der Düsenbohrung des ersten Plasmabrenners 2a um den Winkel β geneigt. Der Plasmastrahl 3b des zweiten Plasmabrenners 2b ist in die vom Plasmastrahl 3a des ersten Plasmabrenners 2a ausgebildet Schnittfuge 4.1, die die Breite b1 hat, hinein geführt.

Der Plasmastrahl 3b des zweiten Plasmabrenners 2b erwärmt zumindest eine

Schnittfläche 4.2 (Figur 9b) oder 4.3 (Figur 9a) so, dass die durch das Schneiden mit dem ersten Plasmabrenner 2a verursachte Erhöhung der Härte des Werkstoffs im Bereich der Schnittfläche(n) 4.2 und/oder 4.3, die über 400 (HV 10) betragen kann, von einem hohen Wert auf einen niedrigeren Wert reduziert wird. Nach der Norm EN 1090-2 muss die Aufhärtung auf einen Wert von unter kleiner/gleich 380 (HV 10) reduziert werden, besser ist jedoch eine deutlich größere Reduzierung auf einen Wert der Härte von unter 340 (HV 10), damit verfahrensbedingte Schwankungen nicht zum Überschreiten der zulässigen Höchstwerte führen.

Gleichzeitig kann der der Plasmastrahl 3b des zweiten Plasmabrenners 2b auf die von der Schnittfläche 4.2; 4.3 und der Werkstückoberseite 4.8 gebildeten Kante 4.6 (Figur 9b) oder 4.7 (Figur 9a) treffen und diese abschrägen, anschmelzen und/oder abrunden. Oft ist diese Kante nach dem Schneiden mit dem ersten Plasmabrenner 2a scharfkantig, was für die Weiterbearbeitung nach dem Schneiden unvorteilhaft ist. Dies trifft z. B. dann zu, wenn das Werkstück 4 beschichtet werden soll (Farbe, Zink,...). Durch den zweiten Plasmabrenner 2b wird die Kante "gebrochen" oder entgratet und die Schicht haftet besser.

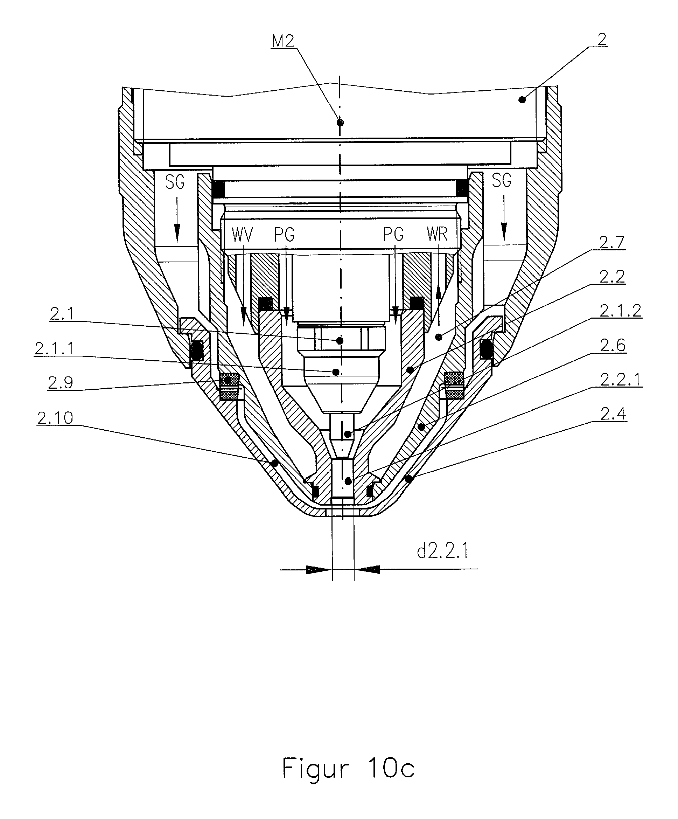

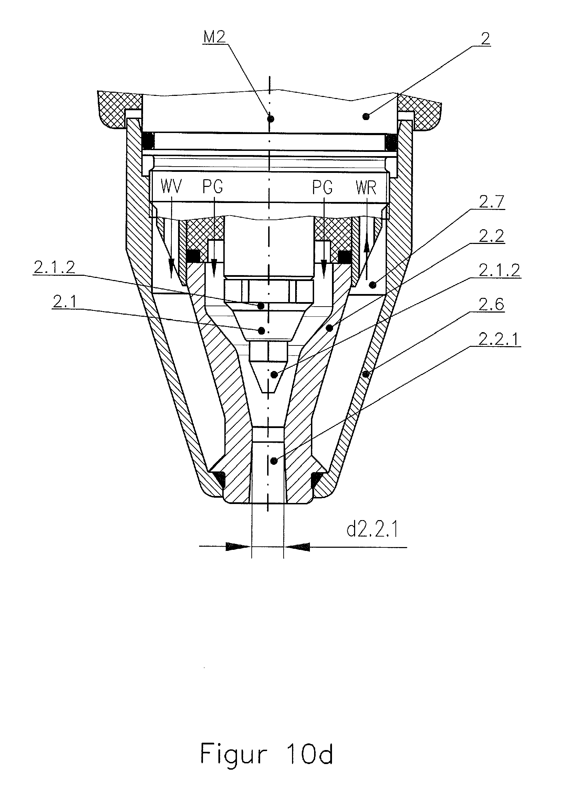

Die **Figuren 10a** **und** **10 b** zeigen beispielhaft Details (Schnittbilder) der Plasmabrenners 2, 2a, 2b oder 2c. Die wesentlichen dargestellten Bestandteile des Brenners 2 sind:
- der Plasmabrennerkopf (ohne Bezugszeichen),
- die Elektrode 2.1, bestehend aus dem Elektrodenhalter 2.1.1 und dem Emissionseinsatz 2.1.2, die hier als Flachelektrode ausgeführt ist und besonders für sauerstoffhaltige bzw. oxidierende Gase oder Gasgemische (bspw. Sauerstoff, Luft, Sticksoff-Sauerstoff-Gemisch) als Plasmagas geeignet ist und im Wesentlichen aus Hafnium oder Zirkonium besteht (für nicht sauerstoffhaltige Plasmagase ist auch Wolfram möglich)
- die Düse 2.2 mit der Düsenbohrung 2.2.1, die einen minimalen Innendurchmesser d2.2.1 aufweist, die den Plasmastrahl 3 (nicht dargestellt) einschnürt
- das Plasmagasführungsteil.2.8, das das Plasmagas PG in den Düseninnenraum führt, dieses kann axiale und/oder radial ausgerichtete Öffnungen aufweisen, die das Plasmagas PG laminar oder rotierend durch den Innenraum zwischen Elektrode 2.1 und Düse 2.2 strömen lassen,
- die Düsenkappe 2.6, die die Düse 2.2 am Plasmabrennerkopf fixiert und mit der Düse 2.2 eine Raum 2.7 bildet, der das Kühlmittel für die Kühlung der Düse 2.2 vom Kühlmittelvorlauf WV zum Kühlmittelrücklauf WR führt,
- die Sekundärgaskappe 2.4, die mit der Düsenkappe 2.6 einen Raum 2.10 bildet, durch den das Sekundärgas SG strömt,
- das Sekundärgasführungsteil 2.9, das das Sekundärgas in den Raum 2.10 zwischen Düsenkappe 2.6 und Sekundärgaskappe 2.4 führt, das Sekundärgasführungsteil 2.9 kann axiale und/oder radial ausgerichtete Öffnungen aufweisen, die das Sekundärgas SG laminar oder rotierend durch den Raum 2.10 strömen lassen,

Die Mittellinie M2 entspricht Mittellinien 2a bis 2c für die Ausführungen in anderen Figuren 7a bis 7d, 7f, 7h, 7i, 8, 9a und 9b.

Die **Figuren 10c** **und** **10d** zeigen Plasmabrenner 2, 2a, 2b und/oder 2c jedoch im Gegensatz zu den Figuren 10a und 10b mit spitz ausgebildeter Elektrode 2.1, bei der der Emissionseinsatz 2.1.2 aus dem Elektrodenhalter 2.1.1 herausragt, der Emissionseinsatz besteht dann hauptsächlich aus Wolfram. Diese Plasmabrenner sind für nicht sauerstoffhaltige bzw. nicht oxidierende und/oder reduzierende Gase oder Gasgemische als Plasmagas geeignet (Argon, Argon-Wasserstoff-Gemisch, Stickstoff-Wasserstoff-Gemisch, Argon-Stickstoff-Gemisch, Argon-Wasserstoff-Stickstoff-Gemisch, ...)

Der Plasmabrenner 2 wie in **Figur 10d** gezeigt, verfügt im Gegensatz zu den in den Figuren 10a bis 10c gezeigten Plasmabrennern über keine Sekundärgaszuführung und keine Sekundärgaskappe und wird ohne Sekundärgas betrieben. Grundsätzlich können Plasmaschneidbrenner auch ohne Sekundärgas betrieben werden.

Die **Figuren 11a und 11b** zeigen beispielhaft eine Gasführung 2.8 für das Plasmagas PG für einen Plasmabrenner 2 nach Figur 10b, die zwischen der Elektrode 2.1 und der Düse 2.2 angeordnet ist. Die Gasführung 2.8 hat auf dem Umfang verteilte Öffnungen, hier Bohrungen 2.8.1 durch die das Plasmagas PG strömt. Ja nach Anordnung der Bohrungen 2.8.1, hier beispielhaft mit radialem Versatz 2.8a, kann das Plasmagas PG unterschiedlich stark in Rotation versetzt werden. Eine Rotation kann auch durch eine Neigung zur Mittellinie M2 erfolgen.

Soll die Rotation des Plasmagases in die andere Richtung erfolgen, kann dies durch einen Versatz 2.8a in die entgegengesetzte Richtung erfolgen.

Es gibt auch die Möglichkeit, keine Rotation durch eine Gasführung zu erreichen, dann ist beispielsweise kein radialer Versatz der Öffnungen vorhanden. Dies kann besonders bei der indirekten oder vorwiegend indirekten Betriebsweise von Vorteil sein und besonders auch dann, wenn kein Abtrag von Werkstoff an der Schnittfläche 4.2; 4.3 erfolgen soll (siehe auch Figuren 7a, 7b, 7c und 7h).

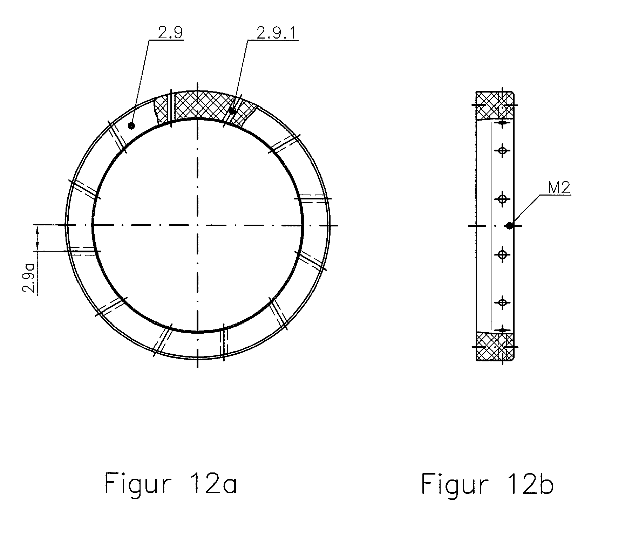

Die **Figuren 12a und 12b** zeigen beispielhaft eine Gasführung 2.9 für das Sekundärgas SG für einen Plasmabrenner 2 nach Figur 10b, die zwischen der Düsenkappe 2.6 und der Sekundärgaskappe 2.4 angeordnet ist. Die Gasführung 2.9 hat über den Umfang verteilte Öffnungen, hier Bohrungen 2.9.1 durch die das Sekundärgas SG strömen kann. Ja nach Anordnung der Bohrungen 2.9.1, hier beispielhaft mit radialem Versatz 2.9a, kann das Sekundärgas SG unterschiedlich stark in Rotation versetzt werden. Eine Rotation kann auch durch eine Neigung zur Mittellinie M2 erfolgen.

Soll die Rotation des Sekundärgases in die andere Richtung erfolgen, kann diese durch einen Versatz 2.9a in die entgegengesetzte Richtung erreicht werden.

Es gibt auch die Möglichkeit, keine Rotation durch eine Gasführung zu bewirken. Dies kann besonders bei der indirekten oder vorwiegend direkten indirekten Betriebsweise von Vorteil sein und besonders auch dann, wenn Abtrag an Werkstoff an der Schnittfläche 4.2; 4.3 erfolgen soll (siehe auch Figuren 7a, 7b, 7c und 7h).

Die Plasmabrenner 2a; 2b können den gleichen grundsätzlichen Aufbau aufweisen.

Wird der erste Plasmabrenner 2a direkt oder über- bzw. vorwiegend direkt betrieben und der zweite Plasmabrenner indirekt oder über- bzw. vorwiegend indirekt betrieben, ist es vorteilhaft, wenn der elektrische Strom, der durch die Elektrode 2.1; 2.1a des ersten Plasmabrenners fließt (Figur 1; 4:I₁+I₂, Figur 5: I₁+I₂+I_{1.1}) größer ist, als der elektrische Strom, der durch die Elektrode 2.1; 2.1b; des zweiten Plasmabrenners 2b (Figur 2: I₂; Figur 3: I₁+I_{1.1}; Figur 4: I₁+I₂; Figur 5: I₁+I₂+I_{1.1}) fließt. Hierdurch wird der Einfluss des zweiten Plasmabrenners 2b auf die geometrische Qualität der thermisch zu beeinflussenden Schnittfläche 4.2; 4.3 reduziert.

Weiterhin ist vorteilhaft, den direkt und/oder überwiegend direkt betriebenen ersten Plasmabrenner 2a, mit einer Düse 2.2.1; 2.2.1a mit einem Durchmesser d.2.2.1 auszustatten und mit einem elektrischen Strom der durch die Elektrode 2.1; 2.1a des ersten Plasmabrenners 2a fließt (Figuren 1 und 4: I₁+I₂, Figur 5: I₁+I₂+I_{1.1}) zu betreiben. Der indirekt und/oder überwiegend indirekt betriebene zweite Plasmabrenner 2b sollte mit einer Düse 2.2.1; 2.2.1b mit einem Durchmesser d.2.2.1 ausgestattet sein und mit einem elektrischen Strom, der durch die Elektrode 2.1; 2.1b des zweiten Plasmabrenners 2b fließt, betrieben werden, wobei beim ersten Plasmabrenner 2a das Verhältnis (Quotient) aus dem elektrischen Strom und dem kleinsten Durchmesser d2.2.1 der Düsenbohrung 2.2.1, die den Plasmastrahl 3 einschnürt, oder des Flächeninhalts der von dieser gebildeten Fläche größer ist als das gleiche Verhältnis beim zweiten Plasmabrenner 2b.

Vorteilhaft ist es, wenn beim ersten direkt und/oder überwiegend direkt betriebenen Plasmabrenner 2a der Quotient aus dem elektrischen Strom (Figuren 1 und 4: I₁+I₂, Figur 5: I₁+I₂+I_{1.1}) (11+12+11.1), der während des größten Teils der Zeit des Schneidens durch die Elektrode 2.1; 2.1a fließt und dem Flächeninhalt der durch den kleinsten Durchmesser d2.2.1 der Düsenbohrung 2.2.1; 2.2.1a gebildeten Fläche der Düse 2.2; 2.2a der ersten Plasmabrenners 2a, größer als 20A/mm² und/oder als der Quotient aus dem Strom (Figur 2: I₂; Figur 3: I₁+I_{1.1}; Figur 4: I₁+I₂; Figur 5: I₁+I₂+I_{1.1}), der während des größten Teils der Zeit des Schneidens durch die Elektrode 2.1; 2.1b fließt und dem Flächeninhalt des kleinsten Durchmesser d2.2.1 der Düsenbohrung 2.2.1; 2.2.1b der Düse 2.2; 2.2b des zweiten oder dritten Plasmabrenners 2b; 2c, kleiner als 20A/mm² beträgt. Die Fläche A wird bekanntermaßen aus A= π * (d²/4) errechnet.

Beispielhafte Parameter für einen direkt oder vorwiegend direkt betriebenen Plasmabrenner zum Schneiden sind:

| Strom in A | Kleinster Durchmesser d2.2.1 der Düsenbohrung 2.2.1 in mm | Kleinste Fläche A der Düsenbohrung in mm² A= π * (d²/4) | Stromdichte in A/mm² |
|---|---|---|---|
| 90 | 1,0 | 3,14 | 28,6 |
| 130 | 1,2 | 3,77 | 34,5 |
| 200 | 1,7 | 5,34 | 37,5 |
| 280 | 2,6 | 8,17 | 34,3 |
| 360 | 3,0 | 9,42 | 38,2 |

Beispielhafte Parameter für einen indirekt oder über- bzw. vorwiegend indirekt betriebenen Plasmabrenner ohne Zusatzelektrode sind:

| Strom in A | Kleinster Durchmesser d2.2.1 der Düsenbohrung 2.2.1 in mm | Fläche der Düsenbohrung in mm² A=π * (d²/4) | Stromdichte in A/mm² |
|---|---|---|---|
| 150 | 4,2 | 13,37 | 11,37 |
| 90 | 3,0 | 9,42 | 9,55 |

### Bezugszeichenliste:

- 1: Plasmaanlage
- 1.1: Stromquelle
- 1.1a: Stromquelle
- 1.2: Pilotwiderstand
- 1.3: Zündgerät
- 1.4: Schaltkontakt
- 2: Plasmabrenner
- 2a: erster Plasmabrenner
- 2b: zweiter Plasmabrenner
- 2c: dritter Plasmabrenner
- 2.1: Elektrode
- 2.1a: Elektrode
- 2.1b: Elektrode
- 2.1.1: Elektrodenhalter
- 2.1.2: Emissionseinsatz
- 2.2: Düse
- 2.2a: Düse
- 2.2b: Düse
- 2.2.1: Düsenbohrung
- 2.2.1a: Düsenbohrung
- 2.2.1b: Düsenbohrung
- 2.3: Plasmagaszuführung
- 2.4: Sekundärgaskappe
- 2.4a: Sekundärgaskappe
- 2.4.b: Sekundärgaskappe
- 2.5: Sekundärgaszuführung
- 2.6: Düsenkappe
- 2.7: Raum zwischen Düse und Düsenkappe
- 2.8: Plasmagasführungsteil
- 2.8.1: Öffnung
- 2.8a: radialer Versatz
- 2.9: Sekundärgasführungsteil
- 2.9.1: Öffnung
- 2.9a: radialer Versatz
- 2.10: Raum zwischen Düsenkappe und Sekundärgaskappe
- 3: Plasmastrahl
- 4: Werkstück
- 4.1: Schnittfuge
- 4.1a: Schnittfuge
- 4.1b: Schnittfuge
- 4.2: Schnittfläche
- 4.2a: Schnittfläche
- 4.2b: Schnittfläche
- 4.3: Schnittfläche
- 4.3a: Schnittfläche
- 4.3b: Schnittfläche
- 4.4: Teil des Werkstücks
- 4.5: Teil des Werkstücks
- 4.6: Kante
- 4.7: Kante
- 4.8: Oberseite des Werkstücks
- 4.9: Teil des Werkstücks
- 5: Verbindungsleitung und Schläuche
- 5.1: Verbindungsleitung Plasmaschneidanalage - Elektrode
- 5.2: Verbindungsleitung Plasmaschneidanlage - Düse
- 5.3: Verbindungsleitung Plasmaschneidanlage - Zusatzelektrode
- 5.4: Verbindungsleitung Plasmaschneidanlage - Werkstück
- 5.5: Gasschlauch Plasmagas
- 5.6: Gasschlauch Sekundärgas
- 6.: Gasversorgung
- 7: Zusatzelektrode
- 20: Bewegungsrichtung Plasmabrenner
- a: Abstand zwischen zwei Plasmabrennern
- a1: Abstand zwischen zwei Plasmabrennern
- a2: Abstand zwischen zwei Plasmabrennern
- b1: Breite der Schnittfuge 4.1a auf Werkstückoberseite
- b2: Breite der Schnittfuge 4.1b auf Werkstückoberseite
- c: Versatz der senkrecht zur Bewegungsrichtung der Plasmabrenner
- c1: Versatz der senkrecht zur Bewegungsrichtung der Plasmabrenner
- c2: Versatz der senkrecht zur Bewegungsrichtung der Plasmabrenner
- d: Abstand zwischen zwei Schnittfugen auf Werkstückoberseite
- d2.2.1: kleinster Durchmesser der Düsenbohrung 2.2.1
- G2a: Rotationsrichtung der Plasma- und/oder Sekundärgases
- G2b: Rotationsrichtung der Plasma- und/oder Sekundärgases
- G2c: Rotationsrichtung der Plasma- und/oder Sekundärgases
- I₁: elektrischer Strom (Düse)
- I₂: elektrischer Strom (Werkstück)
- I_{1.1}: elektrischer Strom (Zusatzelektrode)
- M2: Mittellinie
- M2a: Mittellinie
- M2b: Mittellinie
- M2c: Mittellinie
- M4.1: Linie/Kontur
- PG: Plasmagas
- SG: Sekundärgas
- β: Winkel
- WV: Kühlmittelvorlauf
- WR: Kühlmittelrücklauf

## Patentansprüche

1. Anordnung zum Plasmaschneiden von Werkstücken mit mindestens
zwei Plasmabrennern (2a; 2b; 2c), an denen jeweils mindestens eine Elektrode (2.1a; 2.1b, 2.1c) und eine Düse (2.2a; 2.2b, 2.2c), mindestens eine elektrische Stromquelle (1.1; 1.1a) vorhanden sind, und die Plasmabrenner (2a, 2b, 2c) nacheinander und in einem Abstand a zueinander in Bezug zu ihrer Bewegungsrichtung/Vorschubachsrichtung (20) während der Bearbeitung eines Werkstücks (4) angeordnet sind; wobei
die Plasmabrenner (2a, 2b, 2c) sind in einer gemeinsamen Betriebsweise, betreibbar
oder
während des größten Teils der Zeit beim Schneiden des Werkstücks (4) ist zumindest ein erster Plasmabrenner (2a) mittels eines aus der Düsenbohrung (2.2.1a) der Düse (2.2a) austretenden Plasmastrahls (3a)
in direkter Betriebsweise, bei der der gesamte durch die Elektrode (2.1a) des ersten Plasmabrenners (2a) fließende elektrische Strom durch das Werkstück 4 fließt,
oder
in überwiegend direkter Betriebsweise, bei der mehr als 50% des durch die Elektrode (2.1a) des ersten Plasmabrenners (2a) fließenden elektrischen Stroms durch das Werkstück (4) zur elektrischen Stromquelle 1.1 fließt, betreibbar;
und
mindestens ein zweiter Plasmabrenner (2b; 2c) ist in indirekter Betriebsweise, bei der der gesamte des durch die jeweilige Elektrode (2.1b; 2.1c) des zweiten und/oder eines dritten Plasmabrenners (2b; 2c) fließenden elektrischen Stroms nicht durch das Werkstück (4) zur elektrischen Stromquelle 1.1 fließt,
oder
in überwiegend indirekter Betriebsweise, bei der weniger als 50% des durch die jeweilige Elektrode (2.1b; 2.1c) des zweiten und/oder eines dritten Plasmabrenners (2b; 2c) fließenden elektrischen Stroms durch das Werkstück (4) zur Stromquelle (1.1) fließt, betreibbar.

2. Anordnung nach Anspruch 1, **dadurch gekennzeichnet, dass** mindestens zwei Plasmabrenner (2a, 2b) so angeordnet sind, dass zwei nebeneinander angeordnete Schnittfugen (4.1 und 4.1a) im Werkstück (4) ausgebildet werden.

3. Anordnung nach Anspruch 1 oder 2, **dadurch gekennzeichnet, dass** der aus der/den Düsenbohrung(en) (2.2.1b, 2.2.1c) der Düse(n) (2.2b, 2.2c) des zweiten Plasmabrenners (2b) oder eines weiteren Plasmabrenners (2c) austretende Plasmastrahl (3b, 3c) so ausgerichtet ist/sind, dass der/die Plasmastrahl(en) (3b, 3c) in eine vom ersten Plasmabrenner (2a) im Werkstück (4) ausgebildete Schnittfuge (4.1) hinein geführt ist/sind,
und/oder
der/die Plasmastrahl(en) (3b, 3c) an einer Schnittfläche (4.2; 4.3) einen Teil (4.4; 4.5) des Werkstoffs am Werkstück (4) in der vom ersten Plasmabrenner (2a) im Werkstück (4) ausgebildete Schnittfuge (4.1) abträgt/abtragen.

4. Anordnung nach einem der vorhergehenden Ansprüche, **dadurch gekennzeichnet, dass** die Plasmabrenner (2a, 2b, 2c) so ausgebildet sind, dass die Rotation der Plasmagase PG und/oder der Sekundärgase der Plasmabrenner (2a, 2b, 2c) entgegengesetzt gerichtet ist/sind.

5. Anordnung nach einem der vorhergehenden Ansprüche, **dadurch gekennzeichnet, dass** die Düsenbohrungen (2.2a, 2.2b, 2.2c), durch die die jeweiligen Plasmastrahlen (3a, 3b, 3c) des ersten und des zweiten und/eines weiteren Plasmabrenners (2a, 2b, 2c) austreten, in einem Abstand von maximal 60 mm, bevorzugt von maximal 45 mm, besonders bevorzugt von maximal 27 mm zueinander angeordnet sind.

6. Anordnung nach einem der vorhergehenden Ansprüche, **dadurch gekennzeichnet, dass** die Mittellinien (M2a, M2b; M2c) der Düsenbohrungen (2.2.1a; 2.2.1b, 2.2.1c) der Plasmabrenner (2a, 2b, 2c) parallel zueinander oder in einem Winkel β von max. 75° zueinander geneigt ausgerichtet sind.

7. Verfahren zum Plasmaschneiden von Werkstücken, bei dem mindestens zwei Plasmabrenner (2a; 2b; 2c) nacheinander und in einem Abstand a zueinander in Bezug zu ihrer Bewegungsrichtung/Vorschubachsrichtung (20) während der Bearbeitung eines Werkstücks (4) bewegt werden, wobei mit dem Plasmastrahl (3a) eines ersten Plasmabrenners (2a) im Werkstück (4) eine Schnittfuge (4.1) ausgebildet und das Werkstück (4) geschnitten wird und
mit dem Plasmastrahl (3b, 3c) mindestens eines weiteren Plasmabrenners (2b, 2c) die Härte des Werkstoffs in mindestens einem Bereich mindestens einer Schnittfläche (4.2, 4.3) an der Schnittfuge (4.1) reduziert wird, wobei
die Plasmabrenner (2a, 2b, 2c) in der gleichen Betriebsweise betrieben werden
oder
während des größten Teils der Zeit beim Schneiden des Werkstücks (4) zumindest der erste Plasmabrenner (2a) mittels eines aus der Düsenbohrung (2.2.1a) der Düse (2.2a) austretenden Plasmastrahls (3a) in direkter Betriebsweise, bei der der gesamte durch die Elektrode (2.1a) des ersten Plasmabrenners (2a) fließende elektrische Strom durch das Werkstück 4 fließt,
oder
in überwiegend direkter Betriebsweise, bei der mehr als 50% des durch die Elektrode (2.1a) des ersten Plasmabrenners (2a) fließenden Stroms durch das Werkstück (4) zur elektrischen Stromquelle (1.1) fließt und
mindestens ein zweiter Plasmabrenner (2b; 2c) in indirekter Betriebsweise, bei der der gesamte des durch die jeweilige Elektrode (2.1b; 2.1c) des zweiten und/oder eines dritten Plasmabrenners (2b; 2c) fließenden elektrischen Stroms nicht durch das Werkstück (4) zur elektrischen Stromquelle (1.1) fließt,
oder
in überwiegend indirekter Betriebsweise, bei der weniger als 50% des durch die jeweilige Elektrode (2.1b; 2.1c) des zweiten und/oder eines dritten Plasmabrenners (2b; 2c) fließenden elektrischen Stroms durch das Werkstück (4) zur elektrischen Stromquelle (1.1) fließt, betrieben werden.

8. Verfahren nach Anspruch 7,**dadurch gekennzeichnet, dass** bei einem in überwiegend direkter Betriebsweise betriebenem ersten Plasmabrenner (2a) mindestens 70% des durch die Elektrode (2.1) fließenden elektrischen Stroms auch durch das Werkstück (4) fließen und
bei einem in überwiegend indirekter Betriebsweise betriebenen zweiten Plasmabrenner (2b) maximal 30% des durch die Elektrode (2.1) fließenden elektrischen Stroms durch das Werkstück (4) fließen.

9. Verfahren nach Anspruch 7 oder 8, **dadurch gekennzeichnet, dass** eine Differenz zwischen dem durch die Elektrode (2.1) fließenden Stromes (I₁+I₂+I_{1.1}) des ersten überwiegend direkt betriebenen Plasmabrenners (2a) und /oder überwiegend indirekt betriebenen Plasmabrenners (2b) und dem durch das Werkstück (4) fließenden Stroms (I₂), der über die Düse (2.2) des ersten Plasmabrenners (2a) (Strom I₂) und/oder eine Zusatzelektrode 7 (Strom I_{1.1}) fließt, eingehalten wird.

10. Verfahren nach einem der Ansprüche 7 bis 9, **dadurch gekennzeichnet, dass** die Plasmabrenner (2a, 2b, 2c) so bewegt werden, dass sie der gleichen Bewegungsrichtung/Vorschubachsrichtung (20) folgen oder die Plasmabrenner (2a, 2b, 2c) parallel zueinander bewegt werden.

11. Verfahren nach einem der Ansprüche 7 bis 10, **dadurch gekennzeichnet, dass** ein minimaler Abstand von Schnittflächen (4.2a, 4.3b) der Schnittfugen (4.1 und 4.1a), die an jeweils der anderen Schnittfuge (4.1 und 4.1a) zugewandten Seite ausgebildet sind, der maximal dem Fünffachen der Breite b1; b2 der jeweils breiteren Schnittfuge (4.1; 4.1a) beträgt, eingehalten wird.

12. Verfahren nach einem der Ansprüche 7 bis 11, **dadurch gekennzeichnet, dass**, die Plasmabrenner (2a, 2b, 2c) mit einer Geschwindigkeit gegenüber dem Werkstück (4) bewegt werden, die maximal um 20% voneinander abweicht.

13. Verfahren nach einem der Ansprüche 7 bis 13, **dadurch gekennzeichnet, dass** der erste Plasmabrenner (2a) mit einer als Kathode gepolten Elektrode (2.1) und der zweite oder dritte Plasmabrenner (2b; 2c) mit einer als Kathode oder Anode gepolten Elektrode (2.1b, 2.1c) betrieben werden.

14. Verfahren nach einem der Ansprüche 7 bis 13, **dadurch gekennzeichnet, dass** ein Quotient aus dem elektrischen Strom (I₁+I₂+I_{1.1}), der während des größten Teils der Zeit der Bearbeitung zum Schneiden durch die Elektrode 2.1; 2.1a fließt, und dem kleinsten Durchmesser (d2.2.1) der Düsenbohrung (2.2.1a) der Düse (2.2a) des ersten Plasmabrenners (2a), der in direkter oder überwiegend direkter Betriebsweise betrieben wird, größer ist, als der Quotient aus dem elektrischen Strom (I₁+I₂+I_{1.1}), der während des größten Teils der Zeit der Bearbeitung zum Schneiden durch die Elektrode(n) (2.1b, 2.1c) des/der zweiten und/oder dritten Plasmabrenners (2b, 2c) fließt, und dem kleinsten Durchmesser (d2.2.1) der Düsenbohrung(en) (2.2.1b, 2.21c) der Düse(n) (2.2b, 2.2c) des zweiten oder dritten Plasmabrenners (2b; 2c), der/die in indirekter oder überwiegend indirekter Betriebsweise betrieben wird/werden, eingehalten wird.

15. Verfahren nach einem der Ansprüche 7 bis 14, **dadurch gekennzeichnet, dass** ein Quotient aus dem elektrischen Strom (I₁+I₂+I_{1.1}), der während der während des größten Teils der Zeit für die Bearbeitung zum Schneiden durch die Elektrode (2.1a) des ersten Plasmabrenners (2a) fließt und dem Flächeninhalt der durch den kleinsten Durchmesser (d2.2.1) der Düsenbohrung (2.2.1a) gebildeten Fläche der Düse (2.2a) des ersten Plasmabrenners (2a), der in direkter oder überwiegend direkter Betriebsweise betrieben wird, größer als 20 A /mm² und/oder dass als der Quotient aus dem elektrischen Strom (I₁+I₂+I_{1.1}), der während des größten Teils der Zeit für die Bearbeitung zum Schneiden durch die Elektrode(n) (2.1b, 2.1c) des zweiten und/oder eines dritten Plasmabrenners (2b, 2c) fließt und dem und dem Flächeninhalt des kleinsten Durchmesser (d2.2.1) der Düsenbohrung(en) (2.2.1b, 2.2.1c) der Düse(n) (2.2b, 2.2c) des zweiten oder dritten Plasmabrenners (2b; 2c), der/die in indirekter oder überwiegend indirekter Betriebsweise betrieben wird/werden, kleiner als 20 A/mm² beträgt, eingehalten wird.

16. Verfahren nach einem der Ansprüche 7 bis 15, **dadurch gekennzeichnet, dass** ein Quotient aus dem elektrischen Strom (I₁), der während des größten Teils der Zeit für die Bearbeitung zum Schneiden durch die Elektrode (2.1a)) fließt, und der Fläche, die durch den kleinsten Durchmesser (d2.2.1) der Düsenbohrung (2.2.1a) der Düse (2.2a) des ersten Plasmabrenners (2a) gebildet wird, der in direkter oder überwiegend direkter Betriebsweise betrieben wird, größer ist als der Quotient aus dem elektrischen Strom, der während des größten Teils für die Bearbeitung zum Schneiden durch die Elektrode(n) (2.1b, 2.1c) des/der zweiten oder dritten Plasmabrenner(s) (2b; 2c) fließt, eingehalten wird.
